# EUROPÄISCHE PATENTSCHRIFT

(11) **EP 0 870 807 B1**
(45) Veröffentlichungstag und Bekanntmachung des Hinweises auf die Patenterteilung: **11.07.2001**
(21) Anmeldenummer: 98810272.9
(22) Anmeldetag: 30.03.1998
(51) Int. Cl.: C09B 67/22, C09B 62/475, C09B 62/513

(54) **Mischungen von Reaktivfarbstoffen und deren Verwendung**
Mixtures of reactive dyes and their use
Mélanges de colorants réactifs et leur utilisation

(30) Priorität: 07.04.1997 CH 80697
(43) Veröffentlichungstag der Anmeldung: 14.10.1998
(73) Patentinhaber: Ciba Specialty Chemicals Holding Inc., 4057 Basel (CH)
(72) Erfinder: Lehmann, Urs, 4057 Basel (CH); Deitz, Rolf, 79639 Grenzach-Wyhlen (DE); Reichert, Hans, 79618 Rheinfelden (DE); Tzikas, Athanassios, 4133 Pratteln (CH)

(56) Entgegenhaltungen:
- EP-A- 0 600 322
- EP-A- 0 735 112
- DE-A- 2 032 927
- DE-A- 19 620 415
- DATABASE WPI Week 9602, Derwent Publications Ltd., London, GB; AN 1996-018304 & KR 9 402 560 B (KYUNGIN SYNTHETIC CORP) 25 März 1994

## Beschreibung

Die vorliegende Erfindung betrifft Mischungen von Reaktivfarbstoffen, die insbesondere zum Färben oder Bedrucken von stickstoffhaltigen oder hydroxygruppenhaltigen Fasermaterialien geeignet sind und dabei Färbungen oder Drucke mit guten Allgemeinechtechtheiten ergeben.

Gegenstand der vorliegenden Erfindung sind somit Farbstoffmischungen, welche dadurch gekennzeichnet sind, dass sie mindestens einen Reaktivfarbstoff der Formel 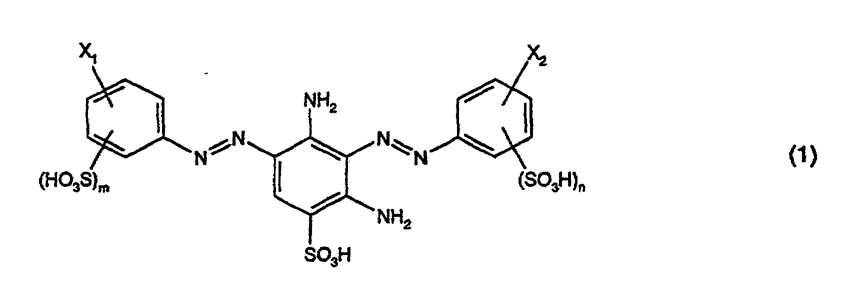 zusammen mit mindestens einem Reaktivfarbstoff der Formel 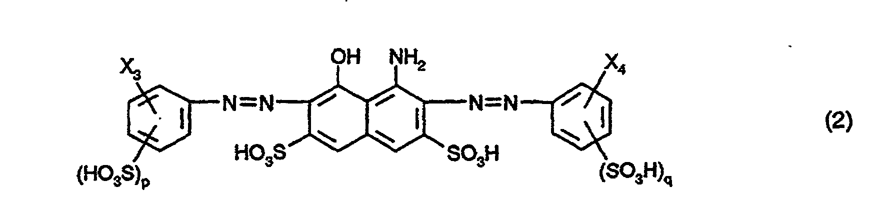 enthalten, worin
m und n unabhängig voneinander jeweils die Zahl 0, 1 oder 2,
p und q unabhängig voneinander jeweils die Zahl 0 oder 1 sind und
X₁, X₂, X₃ und X₄ unabhängig voneinander jeweils einen Rest der Formel

   -SO₂-CH₂-CH₂-U (3a),

   -SO₂-CH=CH₂ (3b),

   -NH-CO-CH(Hal)-CH₂-Hal (3c)

   oder

   -NH-CO-C(Hal)=CH₂ (3d)

   bedeuten und U eine Abgangsgruppe und Hal Halogen ist,
mit der Massgabe, dass die Farbstoffmischungen keine wesentliche Menge eines Reaktivfarbstoffes der Formel 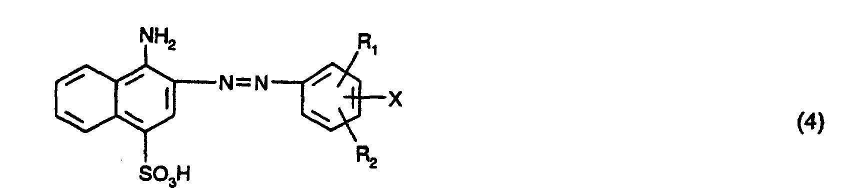 enthalten, worin R₁ und R₂ Wasserstoff, Methyl oder Methoxy sind und X ein Rest der obigen Formel (3a) oder (3b) ist,
oder, falls die Farbstoffmischungen einen Farbstoff der Formel 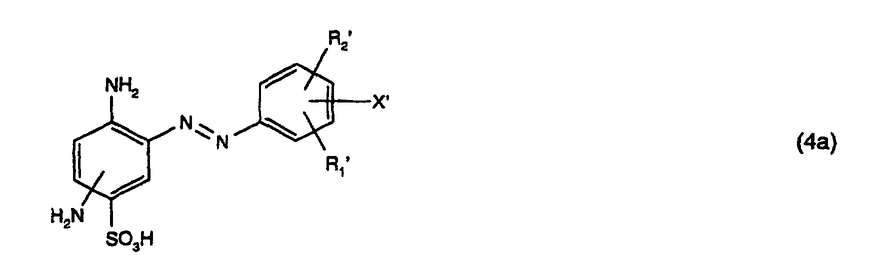 enthalten, worin R₁' und R₂' Wasserstoff, Methyl oder Methoxy sind und X' ein Rest der obigen Formel (3a) oder (3b) ist, das Gewichtsverhältnis des Farbstoffs der Formel (1) zu dem Farbstoff der Formel (4a) grösser als 2:1 ist.

Die DE-A-196 20 415 und die KR-B-94 02 560 beschreiben schwarzfärbende Reaktivfarbstoffzusammensetzungen, die Farbstoffe der oben genannten Formeln (2) und (4) beziehungsweise (2) und (4a) enthalten.

Als Abgangsgruppe U kommt z.B. -Cl, -Br, -F, -OSO₃H, -SSO₃H, -OCO-CH₃, -OPO₃H₂, -OCO-C₆H₅, -OSO₂-C₁-C₄-Alkyl oder-OSO₂-N(C₁-C₄-Alkyl)₂ in Betracht. Bevorzugt ist U eine Gruppe der Formel -Cl, -OSO₃H, -SSO₃H, -OCO-CH₃, -OCC-C₆H₅ oder -OPO₃H₂, insbesondere -Cl oder -OSO₃H und besonders bevorzugt -OSO₃H.

Hal steht bevorzugt für Chlor oder Brom, insbesondere für Brom.

m und n sind bevorzugt unabhängig voneinander jeweils die Zahl 0 oder 1. Besonders bevorzugt ist die Summe von m und n die Zahl 0 oder 1. Ganz besonders bevorzugt sind m und n die Zahl 0.

p und q sind bevorzugt die Zahl 0.

Die Reste X₁ und X₂ sind bevorzugt unabhängig voneinander jeweils ein Rest der Formel (3a) oder (3c). Besonders bevorzugt bedeutet mindestens einer der Reste X₁ und X₂ einen Rest der Formel (3a). Ganz besonders bevorzugt bedeuten X₁ und X₂ einen Rest der Formel (3a). U ist hierbei insbesondere der Rest -OSO₃H. Die Summe von m und n ist hierbei vorzugsweise die Zahl 0 oder 1, insbesondere sind m und n die Zahl 0.

Die Reste X₃ und X₄ sind bevorzugt unabhängig voneinander jeweils ein Rest der Formel (3a) oder (3c). Besonders bevorzugt bedeuten X₃ und X₄ einen Rest der Formel (3a). U ist hierbei insbesondere der Rest -OSO₃H. Bevorzugt bedeuten p und q hierbei die Zahl 0.

Bevorzugt sind solche Farbstoffmischungen, worin X₁, X₂, X₃ und X₄ ein Rest der Formel (3a) oder (3c) sind, U der Rest -OSO₃H ist, und die Summe von m und n die Zahl 0 oder 1 ist. Hal ist hierbei bevorzugt Brom.

Als Reaktivfarbstoffe der Formel (1) sind solche der Formeln 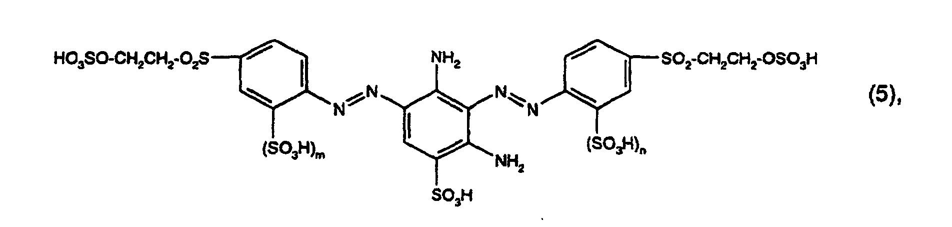 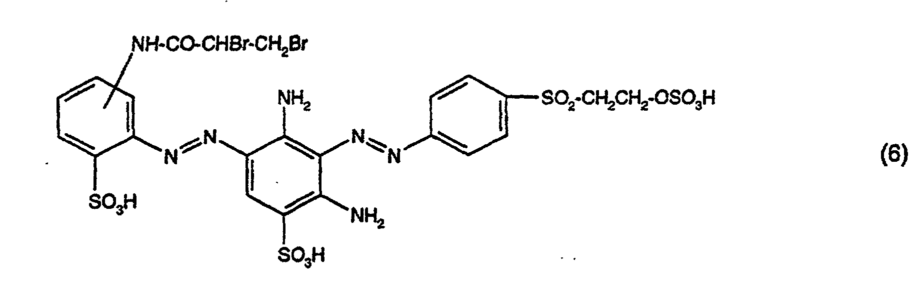 und 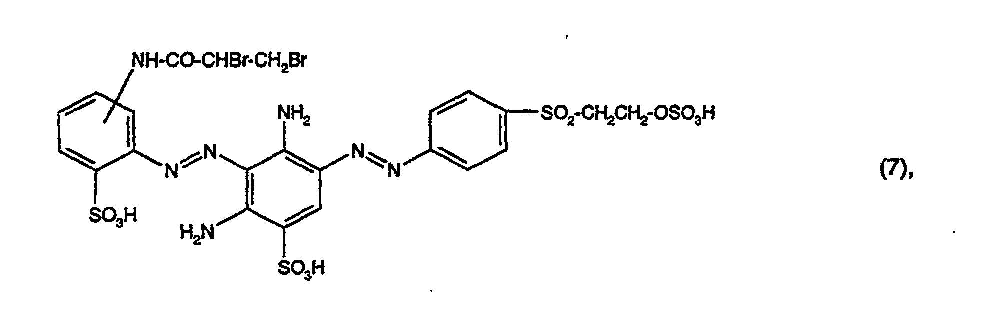 insbesondere solche der Formel (5) oder (6) und vorzugsweise solche der Formel (5) bevorzugt. Für m und n gelten hierbei die oben angegebenen Bedeutungen und Bevorzugungen. Bevorzugt ist hierbei die Summe von m und n die Zahl 0 oder 1.

Als Reaktivfarbstoffe der Formel (2) sind solche der Formeln 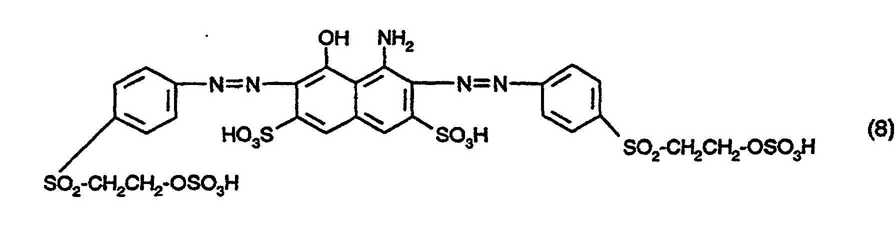 und 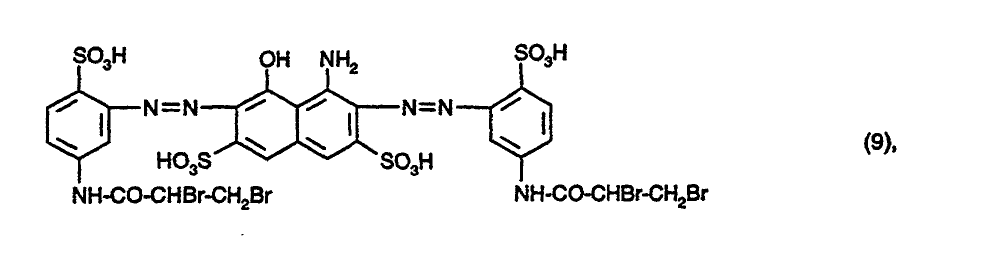 insbesondere solche der Formel (8), bevorzugt.

Besonders bevorzugt sind Farbstoffmischungen, welche mindestens einen Reaktivfarbstoff aus der Gruppe der Formeln (5), (6) und (7) zusammen mit mindestens einem Reaktivfarbstoff aus der Gruppe der Formeln (8) und (9) enthalten. Die Summe von m und n ist hierbei vorzugsweise die Zahl 0 oder 1. Insbesondere sind m und n die Zahl 0.

Ganz besonders bevorzugt sind Farbstoffmischungen, welche mindestens einen Reaktivfarbstoff der Formel (5) zusammen mit einem Reaktivfarbstoff der Formel (8) enthalten. Die Summe von m und n ist hierbei vorzugsweise die Zahl 0 oder 1. Insbesondere sind m und n die Zahl 0.

Von Interesse sind ferner Farbstoffmischungen, welche mindestens einen Reaktivfarbstoff der Formel (6) oder (7), insbesondere der Formel (6), zusammen mit einem Reaktivfarbstoff der Formel (8) enthalten.

Die erfindungsgemässen Farbstoffmischungen können neben den oben genannten Reaktivfarbstoffen weitere Farbstoffe, insbesondere weitere Reaktivfarbstoffe zur Nuancierung, enthalten.

Unter wesentlichen Mengen an Reaktivfarbstoffen der Formel (4) sind z.B. Mengen oberhalb von 5 Gewichtsprozent, bezogen auf das Gesamtgewicht der Farbstoffmischung, zu verstehen. Bevorzugt enthalten die erfindungsgemässen Farbstoffmischungen keinen Reaktivfarbstoff der Formel (4).

Das weiter oben genannte Gewichtsverhältnis des Farbstoffs der Formel (1) zu dem Farbstoff der Formel (4a) ist vorzugsweise grösser als 3:1, insbesondere grösser als 4:1 und besonders bevorzugt grösser als 6:1. Ganz besonders bevorzugt ist dieses Gewichtsverhältnis grösser als 10:1, vorzugsweise grösser als 20:1 und insbesondere grösser als 40:1.

Gegenstand der vorliegenden Erfindung sind ferner Reaktivfarbstoffe der Formel 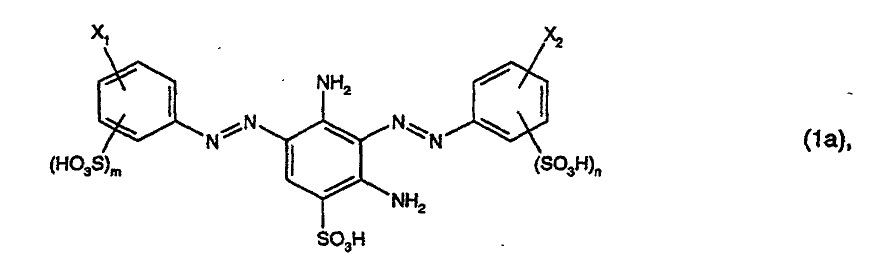 worin
für m, n, X₁ und X₂ die oben unter Formel (1) angegebenen Bedeutungen gelten und einer der Reste X₁ und X₂ einen Rest der Formel (3a), (3b), (3c) oder (3d) bedeutet und der andere der Reste X₁ und X₂ einen Rest der Formel (3c) oder (3d) bedeutet. Für m, n, X₁ und X₂ gelten hierbei die oben angegebenen Bevorzugungen. Für die Reaktivfarbstoffe der Formel (1a) gelten die oben für die Reaktivfarbstoffe der Formel (1) angegebenen Bevorzugungen.

Gegenstand der vorliegenden Erfindung ist ferner ein Verfahren zur Herstellung der Reaktivfarbstoffe der Formel (1a), welches dadurch gekennzeichnet ist, dass man Verbindungen der Formeln 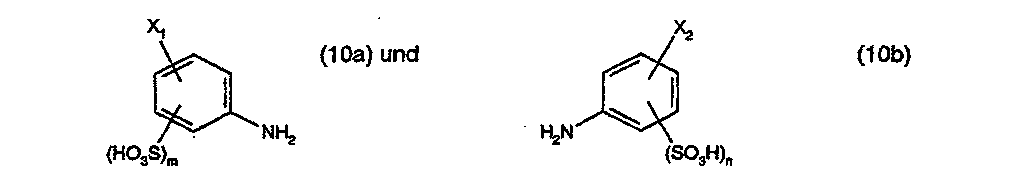 diazotiert und in beliebiger Reihenfolge auf eine Kupplungskomponente der Formel 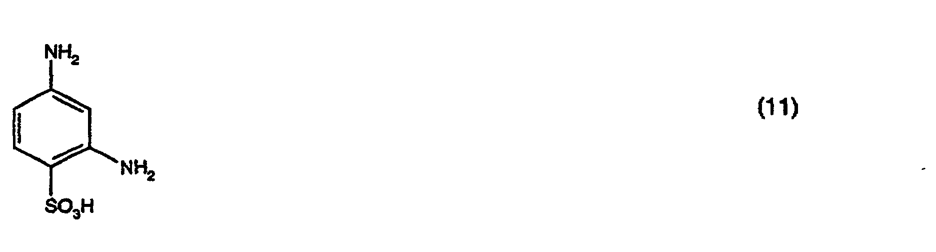 kuppelt.

Die Diazotierung kann in an sich bekannter Weise erfolgen, z.B. mit Natriumnitrit in einem wässrigen, salzsauren Medium. Die Kupplung kann ebenfalls gemäss bekannten Verfahren erfolgen, z.B. bei einer Temperatur von 0 bis 30°C und einem pH-Wert von beispielsweise 3 bis 6.

Die Reaktivfarbstoffe der Formel (2) sind bekannt oder können in Analogie zu bekannten Verfahren erhalten werden. Reaktivfarbstoffe der Formel (1) können analog den Angaben zur Herstellung der Reaktivfarbstoffe der Formel (1a) erhalten werden.

Die Reaktivfarbstoffe der Formeln (1), (2) und (1a) enthalten Sulfogruppen, welche jeweils entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz, vorliegen. Die Reaktivfarbstoffe der Formeln (1), (2) und (1a) und somit auch die Farbstoffgemische können weitere Zusätze, z.B. Kochsalz oder Dextrin, enthalten.

Die Farbstoffe der Formeln (1) und (2) liegen in dem Farbstoffgemisch z.B. im Gewichtsverhältnis von 1:99 bis 99:1, vorzugsweise 5:95 bis 95:5 und besonders bevorzugt 10:90 bis 90:10, vor.

Die erfindungsgemässen Farbstoffgemische können z.B. durch Mischung der Einzelfarbstoffe hergestellt werden. Dieser Mischprozess erfolgt z.B. in geeigneten Mühlen, z.B. Kugel- oder Stiftmühlen, sowie in Knetern oder Mixern.

Einen weiteren Gegenstand der vorliegenden Erfindung stellt ein Verfahren zum Färben oder Bedrucken von natürlichen oder synthetischen Polyamidfasermaterialen dar, welches dadurch gekennzeichnet ist, dass man eine Farbstoffmischung verwendet, welche mindestens einen Reaktivfarbstoff der Formel 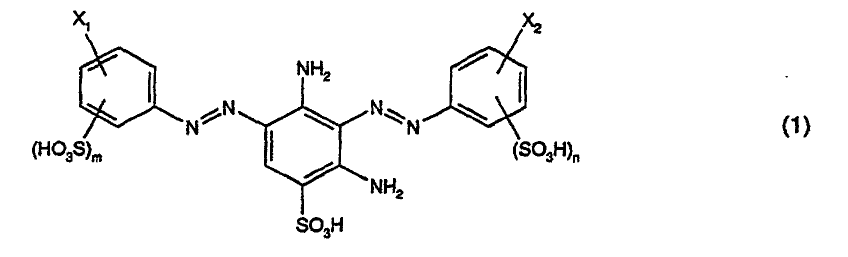 zusammen mit mindestens einem Reaktivfarbstoff der Formel 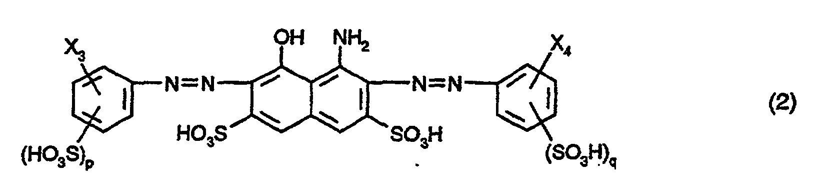 enthält, worin
m und n unabhängig voneinander jeweils die Zahl 0, 1 oder 2,
p und q unabhängig voneinander jeweils die Zahl 0 oder 1 sind und
X₁, X₂, X₃ und X₄ unabhängig voneinander jeweils einen Rest der Formel

   -SO₂-CH₂-CH₂-U (3a),

   -SO₂-CH=CH₂ (3b),

   -NH-CO-CH(Hal)-CH₂-Hal (3c)

   oder

   -NH-CO-C(Hal)=CH₂ (3d)

   bedeuten und U eine Abgangsgruppe und Hal Halogen ist.

Ein weiterer Gegenstand der Erfindung betrifft ein Verfahren zum Färben oder Bedrucken von hydroxylgruppenhaltigen oder stickstoffhaltigen Fasermaterialien mit den erfindungsgemässen Farbstoffgemischen bzw. den erfindungsgemässen Reaktivfarbstoffen der Formel (1a).

Als Fasermaterialien kommen z.B. die natürlichen Cellulosefasern, wie Baumwolle, Leinen, Jute oder Hanf, sowie modifizierte Cellulosefasern wie Zellstoff oder regenerierte Cellulose in Frage. Insbesondere eignen sich die erfindungsgemässen Farbstoffgemische bzw. Farbstoffe zum Färben oder Bedrucken von natürlichen Polyamidfasermaterialien, z.B. Seide oder Wolle, synthetischen Polyamidfasermaterialien, z.B. Polyamid 6 oder Polyamid 6.6, oder von Woll- und synthetischen Polyamidmischgeweben. Die erfindungsgemässen Farbstoffgemische bzw. Farbstoffe sind besonders geeignet zum Färben oder Bedrucken von natürlichen Polyamidfasermaterialien und hierbei insbesondere von Wolle oder von chlorierter oder waschmaschinenfest ausgerüsteter Wolle.

Das genannte Textilfasermaterial kann dabei in den verschiedensten Verarbeitungsformen vorliegen, wie z.B. als Faser, Garn, Flocke, Gewebe oder Gewirke.

Die erfindungsgemässen Farbstoffgemische bzw. Farbstoffe eignen sich für die üblichen Färbe- und Druckverfahren und lassen sich auf verschiedenste Weise auf das Fasermaterial applizieren und fixieren, insbesondere in Form von wässrigen Farbstofflösungen oder - druckpasten. Sie eignen sich sowohl für das Ausziehverfahren als auch zum Foulard-Färben, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Die erfindungsgemässen Farbstoffgemische bzw. Farbstoffe sind ebenfalls für das sogenannte Kaltverweilverfahren geeignet, wonach der Farbstoff zusammen mit dem Alkali auf dem Foulard aufgebracht wird und danach durch mehrstündiges Lagern bei Raumtemperatur fixiert wird.

Das Färben von natürlichen und synthetischen Polyamidfasermaterialien, insbesondere von Wolle, erfolgt vorzugsweise nach dem Ausziehverfahren, bei einem pH-Wert von ca. 3 bis 7, insbesondere 3 bis 5, und bei Temperaturen von z.B. 70 bis 120°C und insbesondere 90 bis 105°C.

Die Färbeflotten oder Druckpasten können ausser Wasser und den Farbstoffen der Formeln (1) und (2) bzw. der Formel (1a) weitere Zusätze, z.B. an sich bekannte Nuancierfarbstoffe, Salze, Puffersubstanzen, Netzmittel, Antischaummittel, Egalisiermittel oder die Eigenschaften des Textilmaterials beeinflussende Mittel, z.B. Weichmachungsmittel, Zusätze zum Flammfestausrüsten oder schmutz-, wasser- und öl-abweisende Mittel sowie wasserenthärtende Mittel und natürliche oder synthetische Verdicker, z.B. Alginate oder Celluloseether, enthalten.

Die erfindungsgemässen Farbstoffgemische bzw. Farbstoffe ergeben egale Färbungen und Drucke mit guten Allgemeinechtheiten, insbesondere guter Wasch-, Reib-, Nass-, Nassreib-und Lichtechtheit. Die erfindungsgemässen Farbstoffgemische bzw. Farbstoffe zeichnen sich ferner durch gleichmässigen Farbaufbau, gutes Aufziehverhalten und hohe Fixiergrade aus. Weiterhin kann bei den erfindungsgemässen Farbstoffgemischen bzw. Farbstoffen auf die sonst übliche Nachbehandlung der Färbungen und Drucke mit sogenannten Fixiermitteln verzichtet werden.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Herstellungsbeispiel 1: Zu einer salzsauren Suspension von 3,95 Teilen 1,3-Phenylendiamin-4-sulfonsäure in 25 Teilen Wasser wird innerhalb von 30 Minuten unter Eiskühlung eine Suspension von 8,70 Teilen diazotierter 5-(2,3-Dibrompropionarnido)-anilin-2-sulfonsäure in 90 Teilen Wasser gegeben. Nach zwei Stunden bei einer Temperatur von 5°C wird die Temperatur auf 15°C erhöht und die Reaktionsmischung wird während 15 Stunden bei dieser Temperatur ausgerührt. Nach Kühlung auf eine Temperatur von 0 bis 5°C wird innerhalb von 30 Minuten eine kalte, salzsaure Suspension von 5,95 Teilen diazotiertem 2-(4-Aminophenylsulfonyl)-ethylhydrogensulfat in 50 Teilen Wasser zugegeben. Der pH wird anschliessend mittels einer wässrigen Natriumhydroxidlösung (30%) auf einen Wert von 4,5 gestellt. Nach beendeter Kupplung wird der Farbstoff durch Zugabe von Natriumchlorid ausgefällt, abfiltriert und getrocknet. Man erhält einen Farbstoff, welcher in Form der freien Säure der Verbindung der Formel 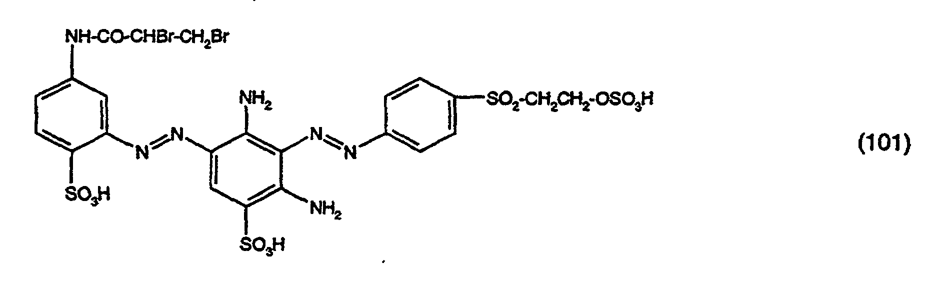 entspricht. Der Farbstoff der Formel (101) färbt Wolle, synthetisches Polyamid oder Baumwolle in orangen Farbtönen.

Herstellungsbeispiele 2 bis 8: In analoger Weise zu den Angaben in Herstellungsbeispiel 1 können die in der folgenden Tabelle 1 in Spalte 2 in Form der freien Säure angegebenen Farbstoffe erhalten werden. Die in Tabelle 1 angegebenen Farbstoffe färben Wolle, synthetisches Polyamid oder Baumwolle in orangen Farbtönen.

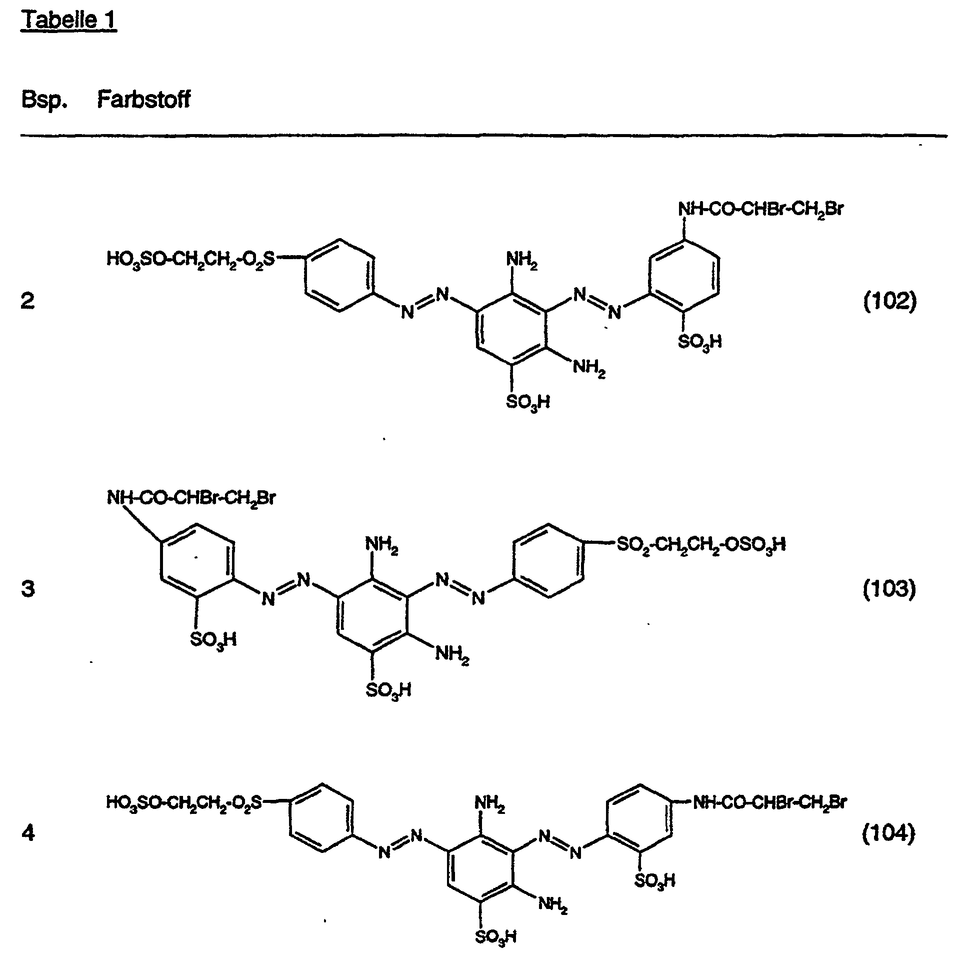

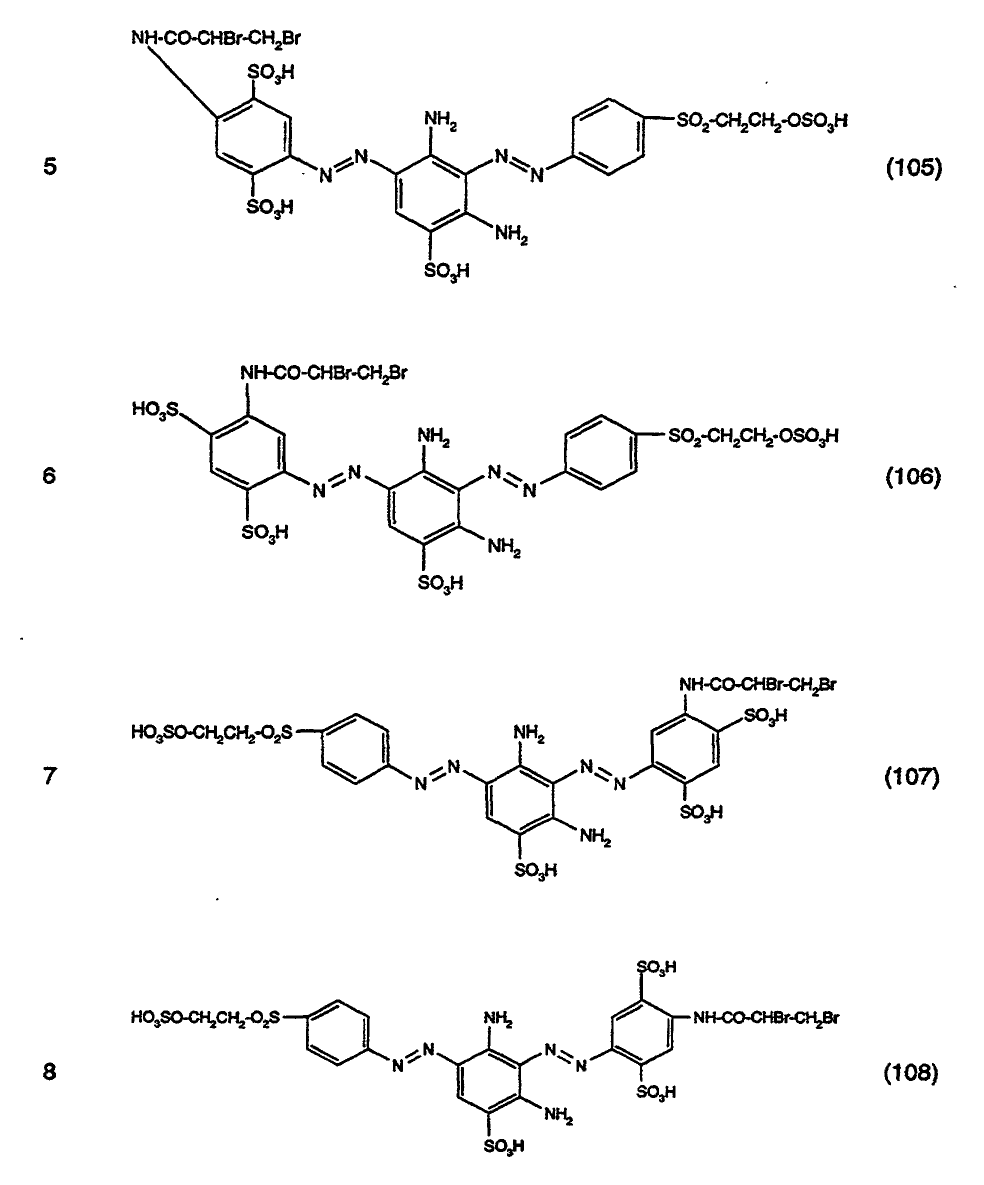

Herstellungsbeispiel 9: Zu einer salzsauren Suspension von 2,82 Teilen 1,3-Phenylendiamin-4-sulfonsäure in 16 Teilen Wasser werden 5,58 Teile diazotiertes 4-Amino-3-sulfo-(2-sulfatoethyl)-phenylsulfon in 36 Teilen Wasser während einer Stunde bei einer Temperatur von 0 bis 5°C unter Eiskühlung zudosiert. Nach beendeter Kupplung werden innerhalb von einer Stunde bei einer Temperatur von 0 bis 5°C 4,22 Teile diazotiertes 2-(4-Aminophenylsulfonyl)-ethylhydrogensulfat in 35 Teilen Wasser zugegeben. Mit ca. 6 Teilen einer wässrigen Natriumhydroxidlösung (30%) wird der pH langsam unter Eiskühlung auf einen Wert von 4,5 gestellt. Es wird ca. eine Stunde bei einer Temperatur von 0 bis 5°C nachgerührt. Anschliessend wird die Reaktionsmischung sprühgetrocknet. Man erhält einen Farbstoff, welcher in Form der freien Säure der Verbindung der Formel 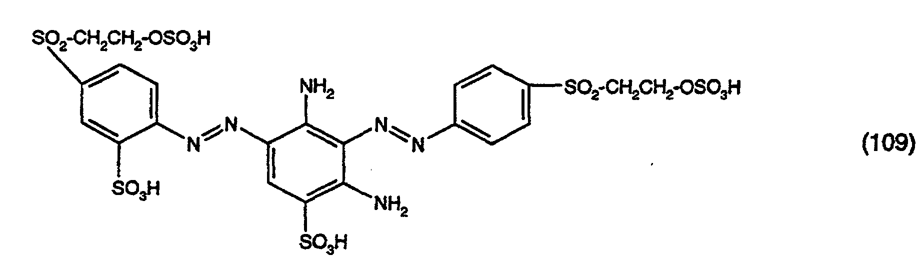 entspricht. Der Farbstoff der Formel (109) färbt Wolle, synthetisches Polyamid oder Baumwolle in orangen Farbtönen.

In analoger Weise zu den Angaben in Herstellungsbeispiel 9 kann der in Form der freien Säure angegebene Farbstoff der Formel 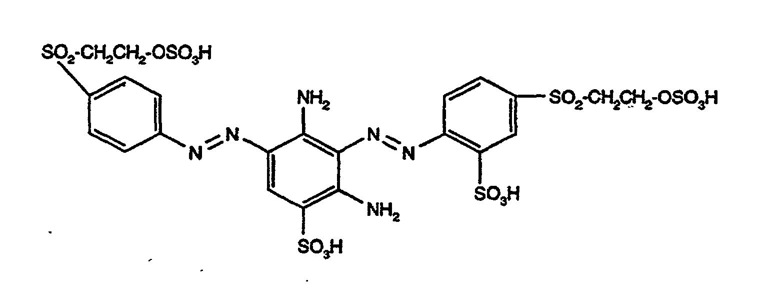 erhalten werden, welcher Wolle, synthetisches Polyamid oder Baumwolle in orangen Farbtönen färbt.

Herstellungsbeispiel 10: 3,8 Teile 1,3-Phenylendiamin-4-sulfonsäure werden bei einer Temperatur von 50°C in 13 Teilen Wasser unter Zusatz von 2,8 Teilen einer wässrigen Natriumhydroxidlösung (30%) bei einem pH-Wert von 7 gelöst. Nach Zugabe von 20 Teilen Eis und 3 Teilen Natriumacetat wird unter starkem Rühren eine kalte salzsaure Suspension von 12 Teilen diazotiertem 2-(4-Aminophenylsulfonyl)-ethylhydrogensulfat in 100 Teilen Wasser zudosiert. Der pH wird mit wässriger Natriumhydroxidlösung (30%) bei einem Wert von 4 gehalten und nach beendeter Zugabe der Diazosuspension auf einen Wert von 4,5 erhöht. Nach beendeter Kupplung wird die Reaktionsmischung sprühgetrocknet. Man erhält einen Farbstoff, welcher in Form der freien Säure der Verbindung der Formel 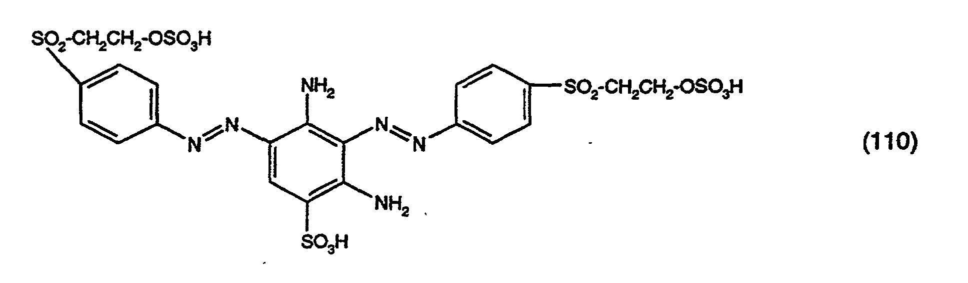 entspricht Der Farbstoff der Formel (110) färbt Wolle, synthetisches Polyamid oder Baumwolle in orangen Farbtönen.

Herstellungsbeispiele 11 bis 22: In analoger Weise zu den Angaben in Herstellungsbeispiel 10 können die in der folgenden Tabelle 2 in Spalte 2 in Form der freien Säure angegebenen Farbstoffe erhalten werden. Die in Tabelle 2 angegebenen Farbstoffe färben Wolle, synthetisches Polyamid oder Baumwolle in orangen Farbtönen.

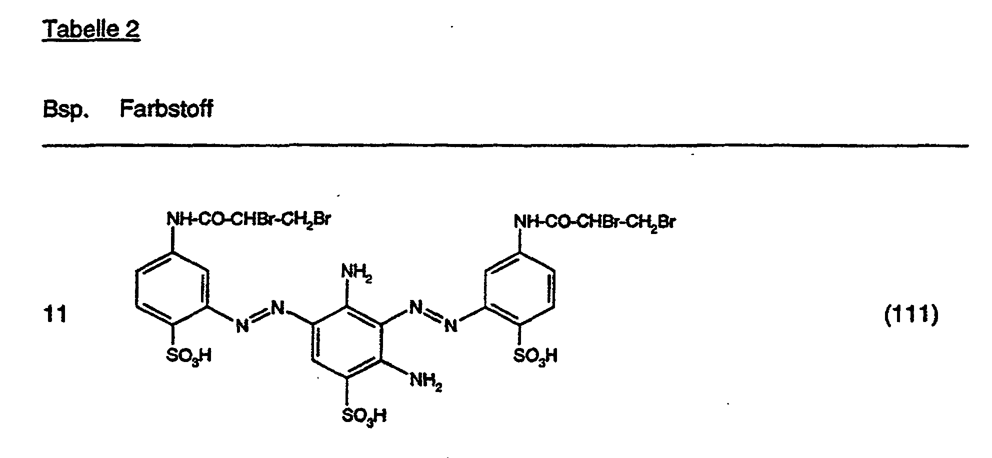

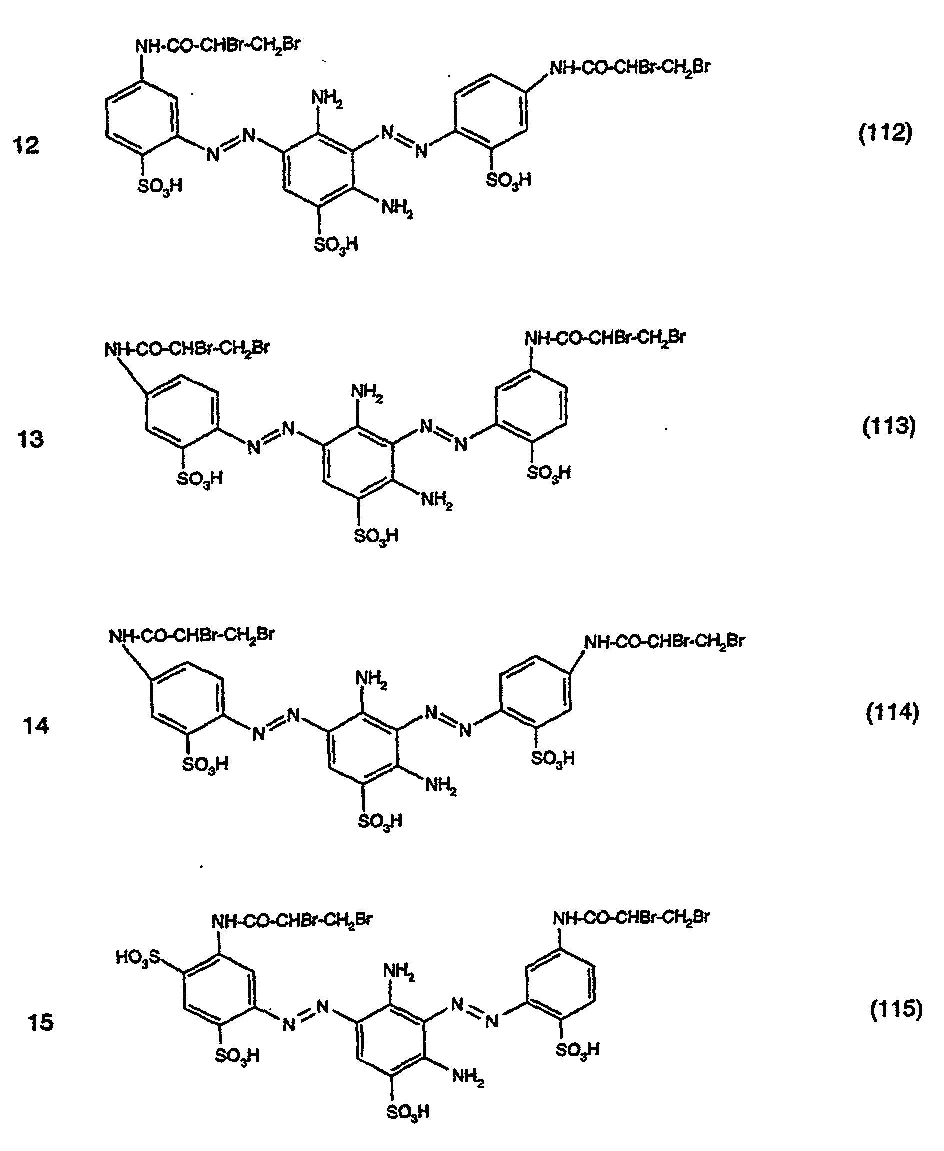

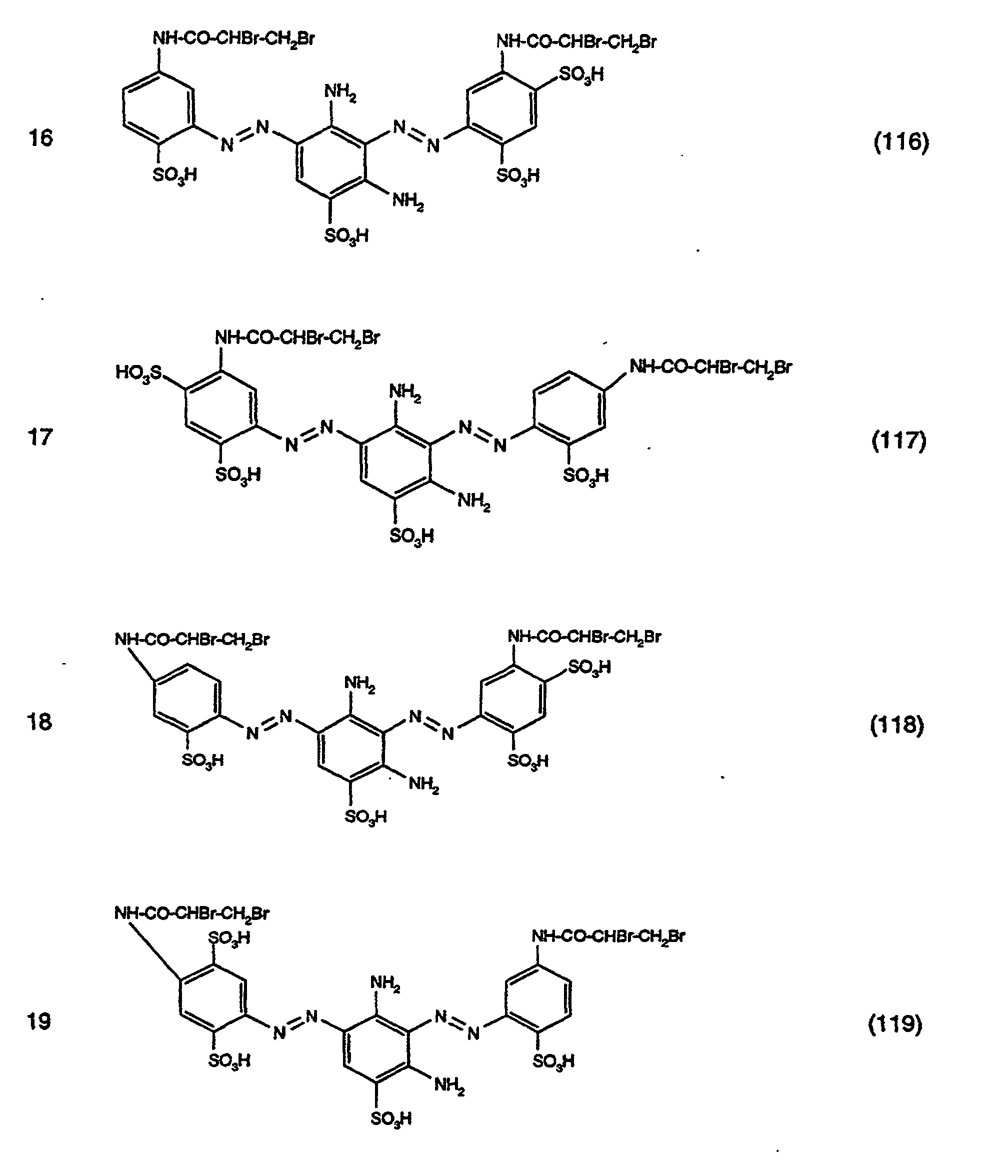

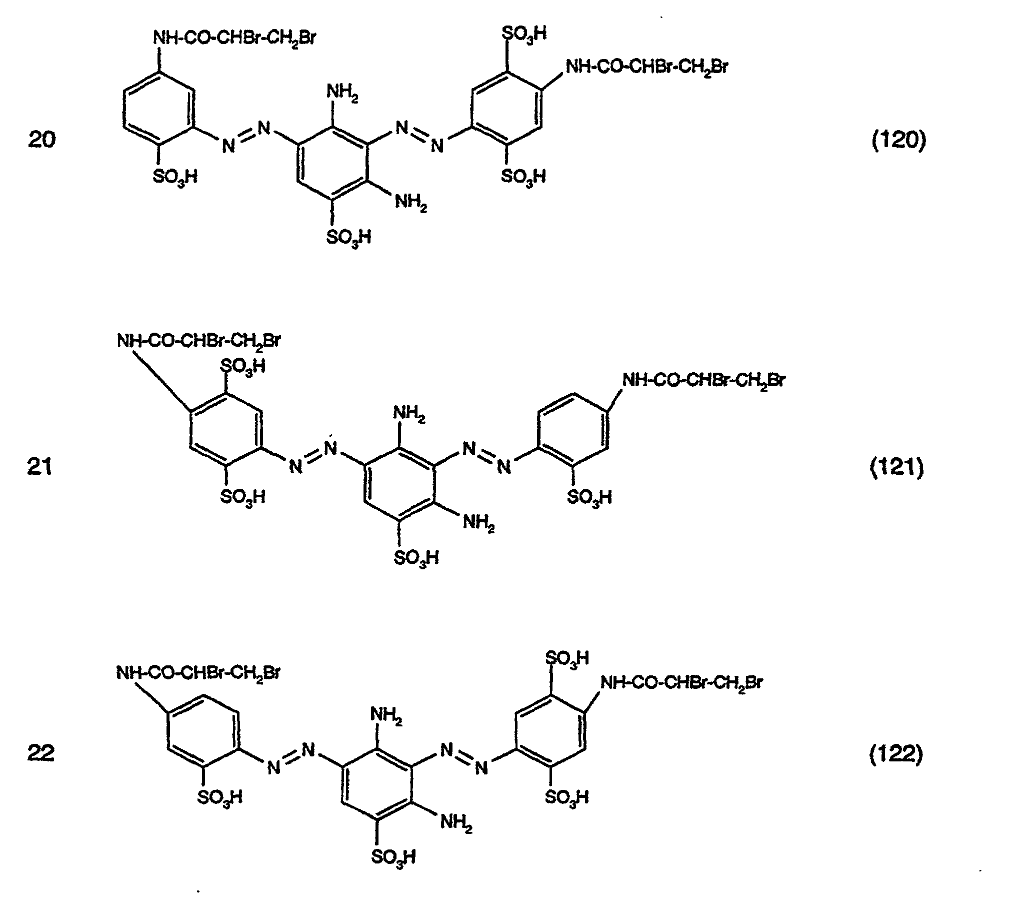

Herstellungsbeispiele 23 bis 32: In analoger Weise zu den Angaben in Herstellungsbeispiel 10 können die in der folgenden Tabelle 3 in Spalte 2 in Form der freien Säure angegebenen Farbstoffe erhalten werden. Die in Tabelle 3 angegebenen Farbstoffe färben Wolle, synthetisches Polyamid oder Baumwolle in orangen Farbtönen.

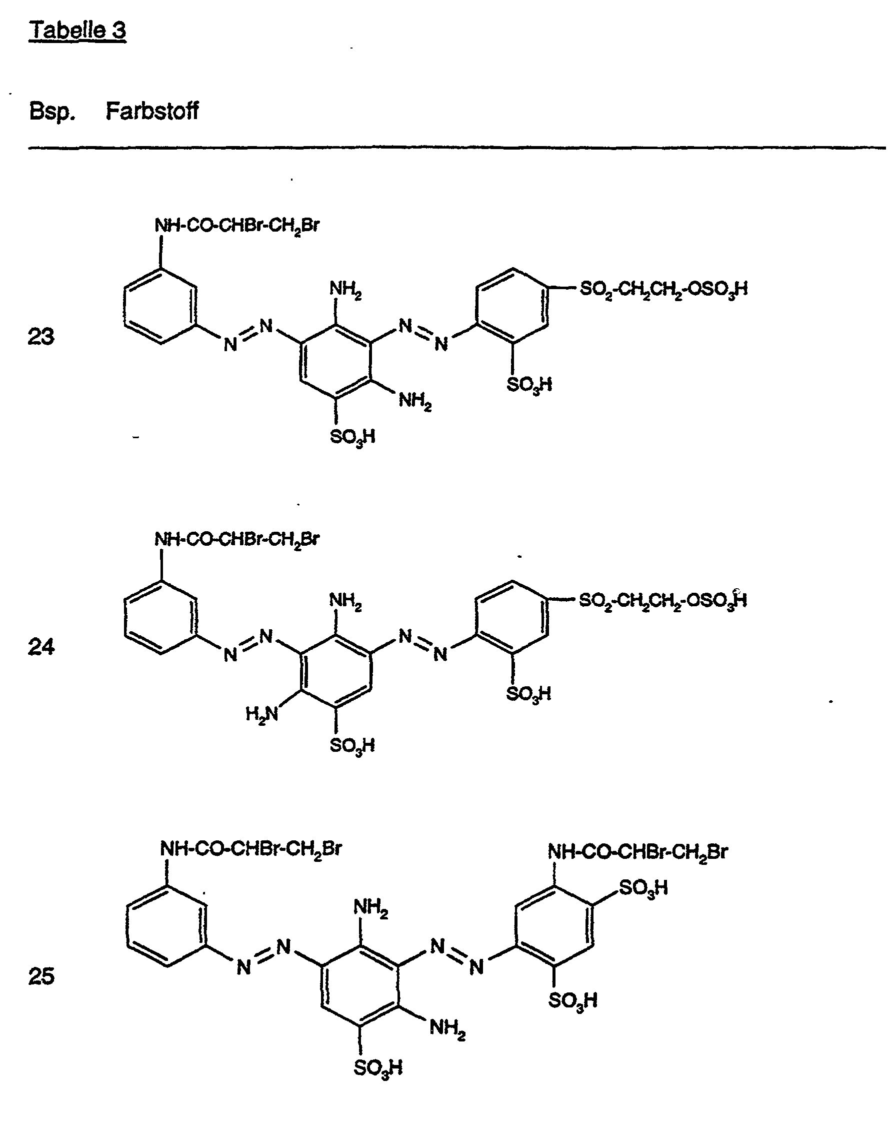

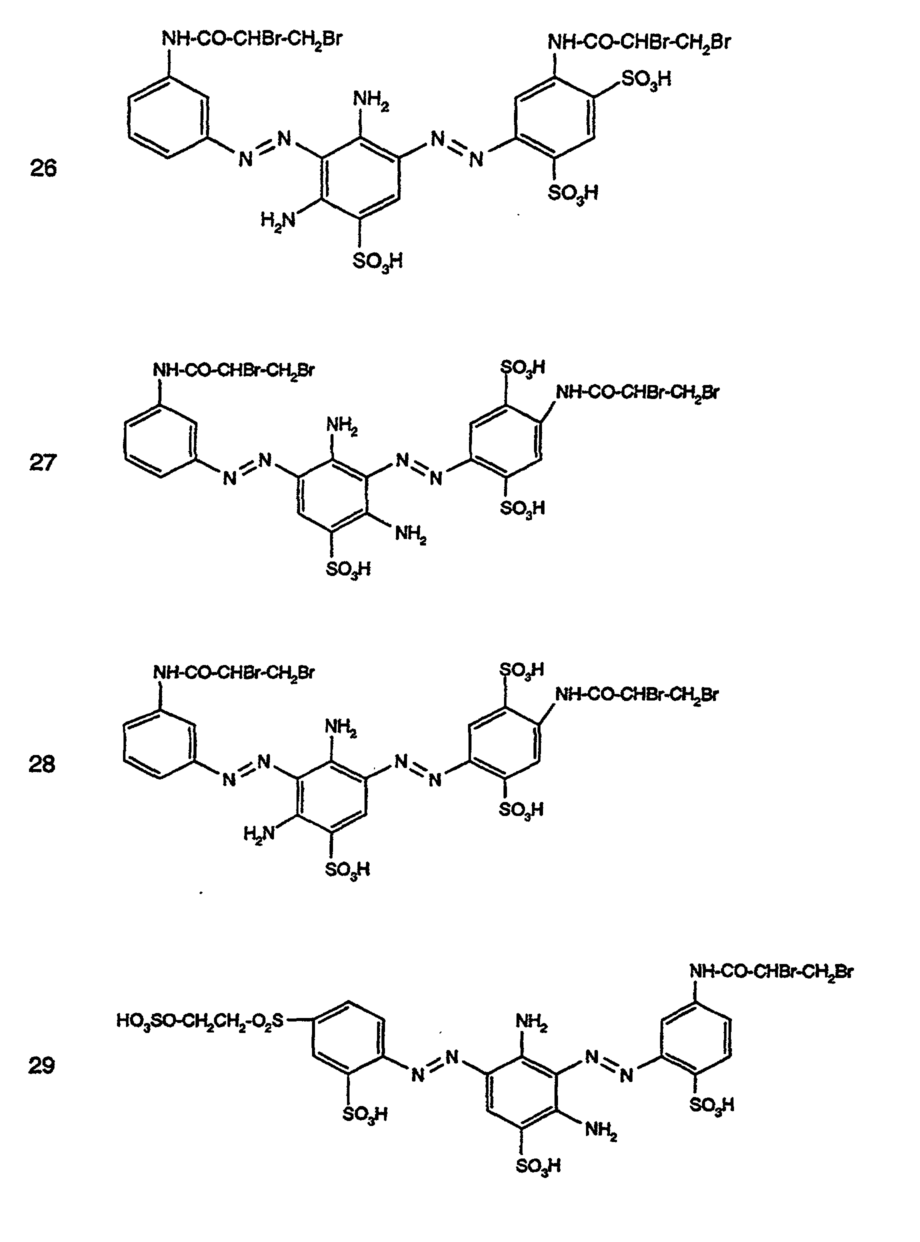

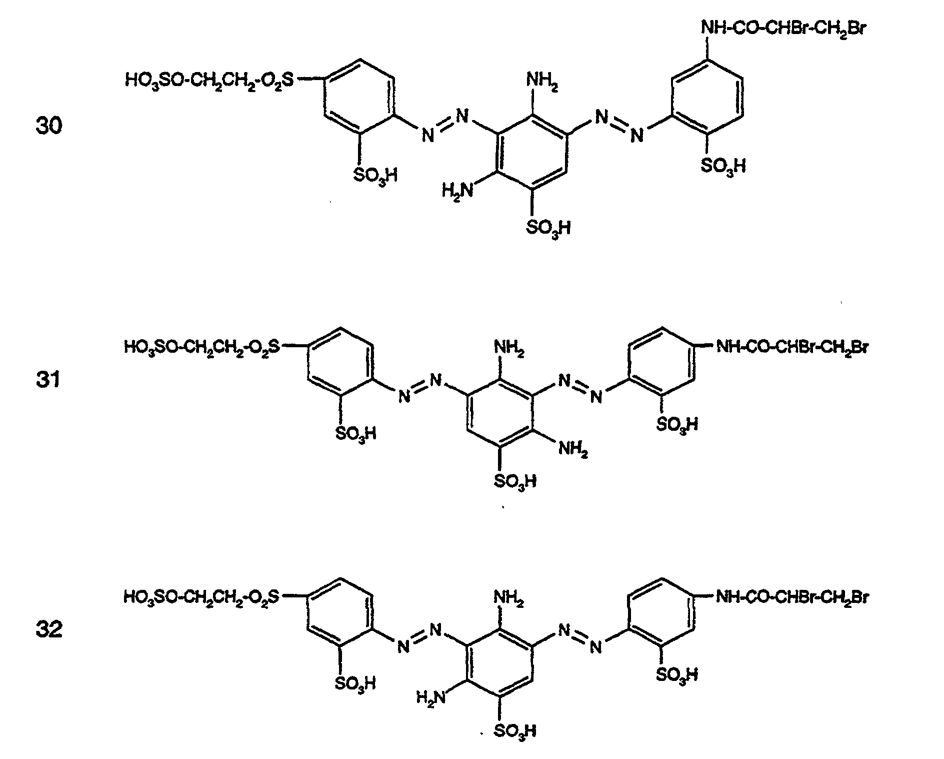

Färbebeispiel 1: 10 g Wollgewebe werden in einem Laborfärbeapparat mit folgender Flotte gefärbt
0,2 g Natriumacetat,
0,5 g 80%-ige Essigsäure,
0,2 g eines handelsüblichen Egalisiermittels (Albegal B® ),
0,36 g des blaufärbenden Farbstoffs der Formel 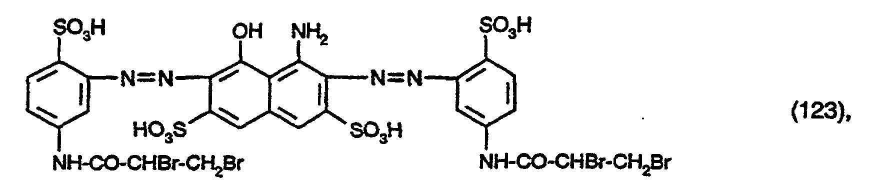
0,04 g des orangefärbenden Farbstoffs der Formel (101) und
200 ml Wasser.

Der pH der Flotte beträgt 4,5. Das Textil wird in der Färbeflotte 5 min bei 40°C behandelt, anschliessend mit einer Aufheizrate von 1°/min auf Kochtemperatur (98°C) erwärmt und 90 Minuten bei dieser Temperatur gefärbt. Nach dem Abkühlen der Flotte auf 80°C wird die Färbung wie üblich gespült und fertiggestellt. Man erhält eine faser- und flächenegale schwarze Färbung mit guten Echtheitseigenschaften.

Färbebeispiele 2 bis 10: Verfährt man wie in Färbebeispiel 1 angegeben, verwendet jedoch anstelle von 0,36 g des blaufärbenden Farbstoffs der Formel (123) und 0,04 g des orangefärbenden Farbstoffs der Formel (101) die in der folgenden Tabelle 4 in Spalte 2 angegebenen Farbstoffmischungen bzw. Farbstoffe in den dort angegebenen Mengen, so erhält man analoge faser- und flächenegale Färbungen mit guten Echtheitseigenschaften. Im Falle der Färbebeispiele 2 bis 8 werden schwarze Färbungen und im Falle der Färbebeispiele 9 und 10 orange Färbungen erhalten.

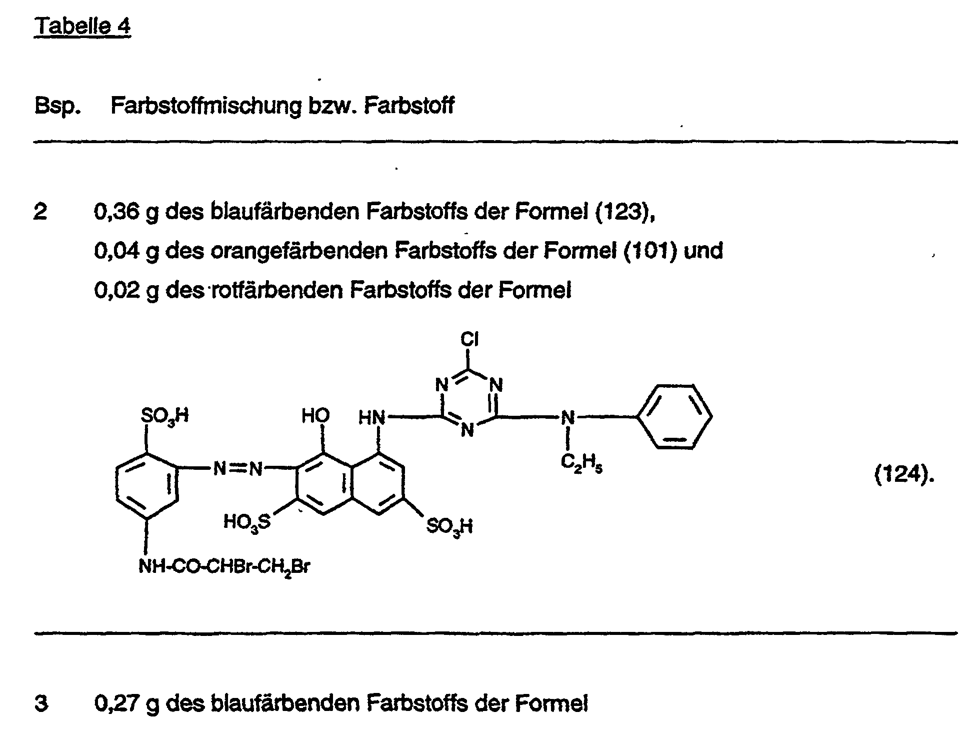

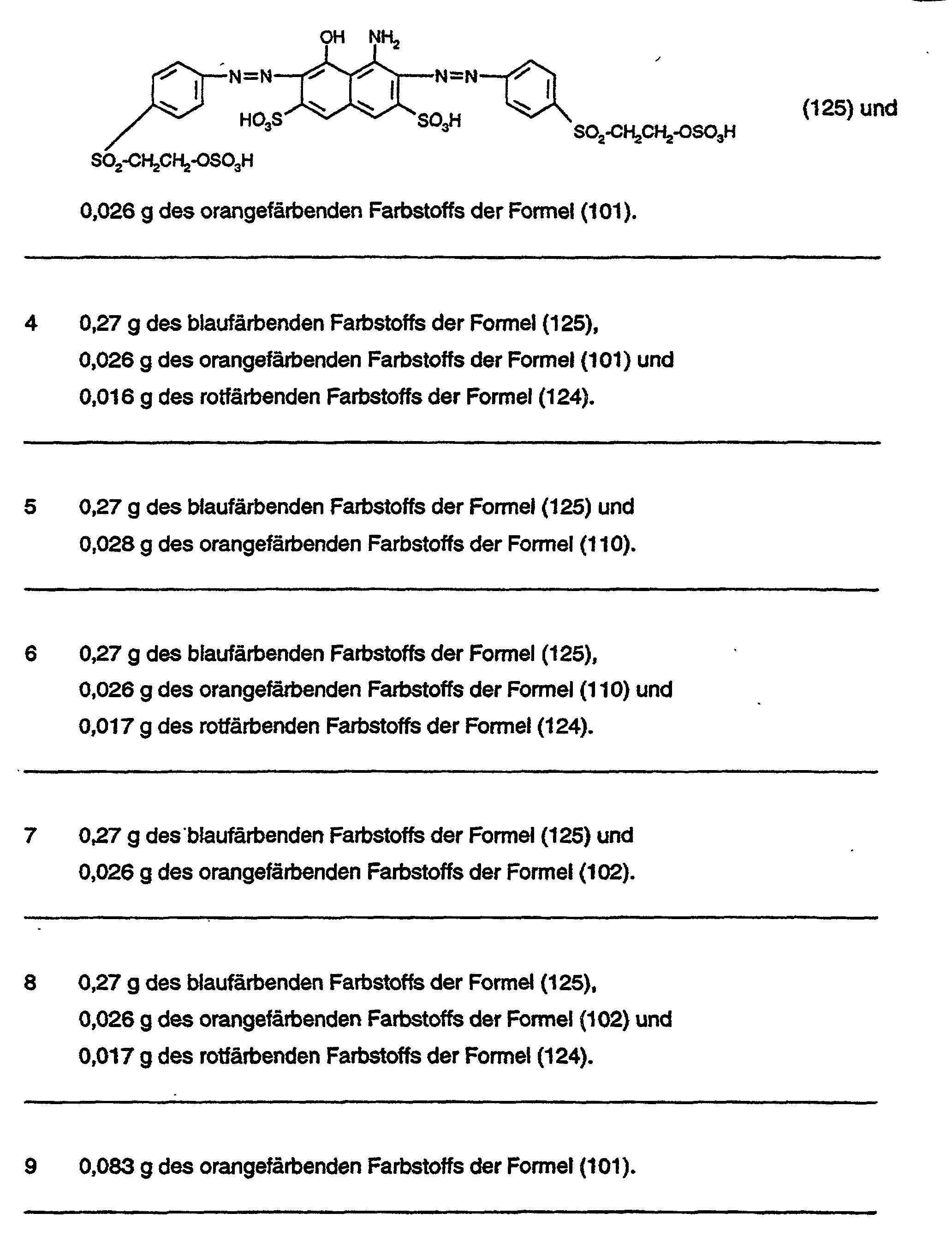

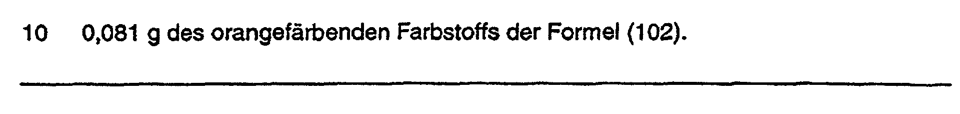

Färbebeispiel 11: 10 g eines nach dem Hercoset-Verfahren auf Superwashstandard ausgerüstetes Wolltricot wird in einem Laborfärbeapparat mit folgender Flotte gefärbt:
0,2 g Natriumacetat
0,5 g 80%-ige Essigsäure
0,5 g Glaubersalz
0,2 g eines handelsüblichen Egalisiermittels (Albegal B® )
0,36 g des blaufärbenden Farbstoffs der Formel (123),
0,04 g des orangefärbenden Farbstoffs der Formel (101) und
200 ml Wasser.

Der pH der Flotte beträgt 4,7. Das Textilmaterial wird in der Färbeflotte 5 Minuten bei 40°C behandelt, dann mit einer Aufheizrate von 1°/min auf 60°C erwärmt und 20 Minuten bei 60°C gehalten. Anschliessend wird mit 1°/min auf Kochtemperatur (98°C) erwärmt und 90 Minuten bei dieser Temperatur gefärbt. Nach dem Abkühlen wird das Textilmaterial in einer frischen 5 g/l Natriumhydrogencarbonat enthaltenden Flotte 20 Minuten bei 80°C und pH 8,3 behandelt. Dann wird wie üblich gespült und dem letzten Spülbad zum Absäuern 1% Ameisensäure, bezogen auf das Fasergewicht, zugesetzt. Man erhält eine faser- und flächenegale schwarze Färbung mit guten Echtheitseigenschaften.

In analoger Weise kann anstelle der Farbstoffmischung aus 0,36 g des blaufärbenden Farbstoffs der Formel (123) und 0,04 g des orangefärbenden Farbstoffs der Formel (101) eine Farbstoffmischung gemäss einem der Färbebeispiele 2 bis 8 bzw. ein Farbstoff gemäss Färbebeispiel 9 oder 10 verwendet werden.

Färbebeispiel 12: 10 g lose Wolle werden in einem Laborfärbeapparat mit folgender Flotte gefärbt:
0,4 g Natriumacetat,
1,0 g 80%-ige Essigsäure,
0,4 g eines handelsüblichen Egalisiermittels (Albegal B® ),
0,36 g des blaufärbenden Farbstoffs der Formel (123),
0,04 g des orangefärbenden Farbstoffs der Formel (101) und
800 ml Wasser.

Der pH der Flotte beträgt 4,7. Das Material wird in der Färbeflotte 5 Minuten bei 40°C behandelt, anschliessend mit einer Aufheizrate von 1°C/min auf Kochtemperatur (98°C) erwärmt und 90 Minuten bei dieser Temperatur gefärbt. Nach Abkühlen der Flotte auf 80°C wird die Färbung wie üblich gespült und fertiggestellt. Man erhält eine faser- und flächenegale schwarze Färbung mit guten Echtheitseigenschaften.

In analoger Weise kann anstelle der Farbstoffmischung aus 0,36 g des blaufärbenden Farbstoffs der Formel (123) und 0,04 g des orangefärbenden Farbstoffs der Formel (101) eine Farbstoffmischung gemäss einem der Färbebeispiele 2 bis 8 bzw. ein Farbstoff gemäss Färbebeispiel 9 oder 10 verwendet werden.

Färbebeispiel 13: 1 kg Wollkammgarn in Form einer Kreuzspule wird in einem Zirkulationsapparat mit einer Flotte bestehend aus
9 l Wasser,
9 g Ammoniumacetat,
37 ml 80%-ige Essigsäure,
9 g eines nichtionogenen Netzmittels (Albegal FFA® ), und
20 g eines handelsüblichen Egalisiermittels (Albegal B® ),

10 Minuten bei 40°C vorbehandelt. Der pH der Flotte beträgt 4,65.
Nach Zugabe einer Lösung, die 36 g des blaufärbenden Farbstoffs der Formel (123) und 4 g des orangefärbenden Farbstoffs der Formel (101) enthält, wird in der Färbeflotte 5 Minuten bei 40°C behandelt und dann mit einer Aufheizrate von 1°C/min auf 70°C erwärmt und 15 Minuten bei 70°C gehalten. Anschliessend wird mit 1°/min auf Kochtemperatur (98°C) erwärmt und 90 Minuten bei dieser Temperatur gefärbt. Nach dem Abkühlen wird das Textilmaterial in einer frischen mit 35 g 35%igem Ammoniak auf pH 8,5 gestellten Flotte 20 Minuten bei 80°C behandelt. Dann wird wie üblich gespült und dem letzten Spülbad zum Absäuem 1% Ameisensäure, bezogen auf das Fasergewicht, zugesetzt. Man erhält eine faser- und flächenegale schwarze Färbung mit guten Echtheitseigenschaften.

Färbebeispiel 14: Verfährt man wie im Färbebeispiel 13 beschrieben, setzt der Färbeflotte aber zusätzlich 4 Gew.-%, bezogen auf das Textilmaterial, eines handelsüblichen Wollschutzmittels (Irgasol HTW® ) zu, färbt bei 105°C und verkürzt die Färbezeit auf 45 min, wird ebenfalls eine faser- und flächenegale schwarze Färbung mit guten Echtheitseigenschaften erhalten.

Färbebeispiel 15: In ein Färbebad, welches 5,1 Teile des Farbstoffs der Formel (125), 0,9 Teile des Farbstoffs der Formel (109) und 60 Teile Natriumchlorid in 1000 Teilen Wasser enthält, geht man bei einer Temperatur von 60°C mit 100 Teilen eines Baumwollgewebes ein. Nach 45 Minuten bei 60°C werden 20 Teile kalziniertes Soda zugegeben. Die Temperatur des Färbebades wird weitere 45 Minuten bei 60°C gehalten. Danach wird das gefärbte Gewebe in üblicher Weise gespült und getrocknet.

Färbebeispiel 16: In ein Färbebad, welches 1,2 Teile des Farbstoffs der Formel (125), 1,2 Teile des Farbstoffs der Formel (110), 3,6 Teile des Farbstoffs der Formel 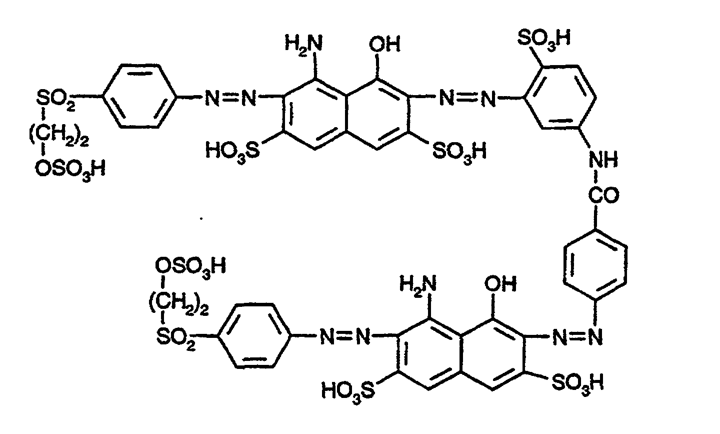 und 30 Teile Natriumchlorid in 1000 Teilen Wasser enthält, geht man bei einer Temperatur von 30°C mit 100 Teilen eines Baumwollgewebes ein. Die Temperatur des Färbebades wird innerhalb von 30 Minuten auf 90°C erhöht und weitere 45 Minuten gehalten. Anschliessend wird die Temperatur innerhalb von ca. 15 Minuten auf 70°C gesenkt, es werden 15 Teile kalziniertes Soda zugegeben, und die Temperatur des Färbebades wird weitere 45 Minuten bei 70°C gehalten. Danach wird das gefärbte Gewebe in üblicher Weise gespült und getrocknet.

Färbebeispiel 17: In ein Färbebad, welches 2,7 Teile des Farbstoffs der Formel (125), 0,9 Teile des Farbstoffs der Formel (110), 2,4 Teile des Farbstoffs der Formel 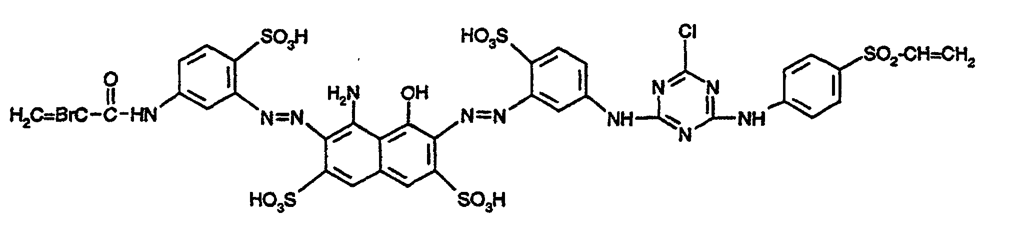 und 90 Teile Natriumchlorid in 1000 Teilen Wasser enthält, geht man bei einer Temperatur von 30°C mit 100 Teilen eines Baumwollgewebes ein. Die Temperatur des Färbebades wird 20 Minuten gehalten und dann innerhalb von ca. 40 Minuten auf 80°C erhöht. Anschliessend werden 20 Teile kalziniertes Soda zugegeben, und die Temperatur des Färbebades wird weitere 45 Minuten bei 80°C gehalten. Danach wird das gefärbte Gewebe in üblicher Weise gespült und getrocknet.

## Patentansprüche

1. Farbstoffmischungen, dadurch gekennzeichnet, dass sie mindestens einen Reaktivfarbstoff der Formel 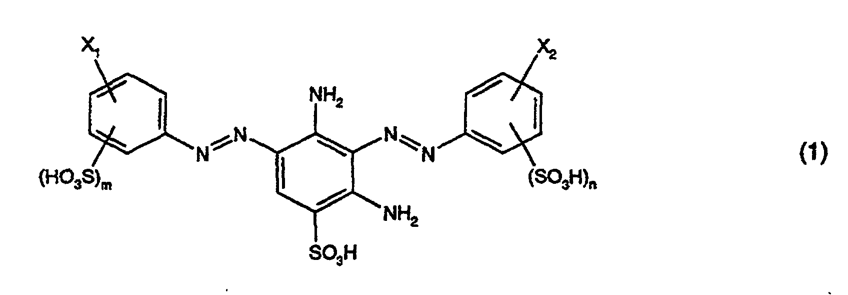 zusammen mit mindestens einem Reaktivfarbstoff der Formel 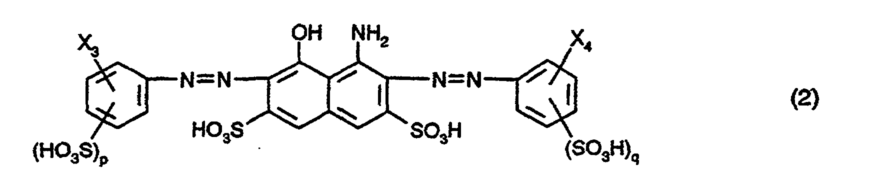 enthalten, worin
m und n unabhängig voneinander jeweils die Zahl 0, 1 oder 2,
p und q unabhängig voneinander jeweils die Zahl 0 oder 1 sind und
X₁, X₂, X₃ und X₄ unabhängig voneinander jeweils einen Rest der Formel
-SO₂-CH₂-CH₂-U (3a),
-SO₂-CH=CH₂ (3b),
-NH-CO-CH(Hal)-CH₂-Hal (3c)
oder
-NH-CO-C(Hal)=CH₂ (3d)
bedeuten und U eine Abgangsgruppe und Hal Halogen ist,
mit der Massgabe, dass die Farbstoffmischungen keine wesentliche Menge eines Reaktivfarbstoffes der Formel 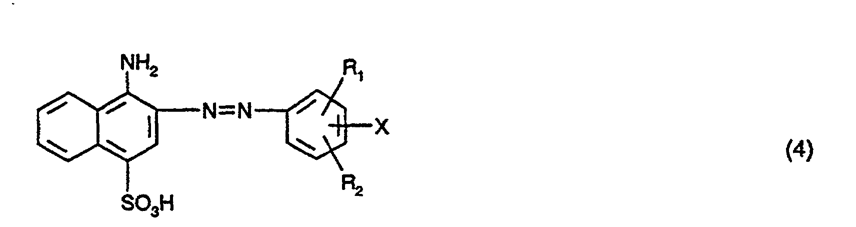 enthalten, worin R₁ und R₂ Wasserstoff, Methyl oder Methoxy sind und X ein Rest der obigen Formel (3a) oder (3b) ist,
oder, falls die Farbstoffmischungen einen Farbstoff der Formel 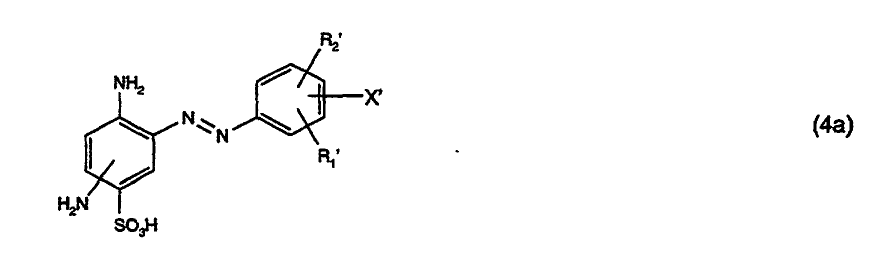 enthalten, worin R₁' und R₂' Wasserstoff, Methyl oder Methoxy sind und X' ein Rest der obigen Formel (3a) oder (3b) ist, das Gewichtsverhältnis des Farbstoffs der Formel (1) zu dem Farbstoff der Formel (4a) grösser als 2:1 ist.

2. Farbstoffmischungen gemäss Anspruch 1, dadurch gekennzeichnet, dass Hal Chlor oder Brom ist.

3. Farbstoffmischungen gemäss einem der Ansprüche 1 und 2, dadurch gekennzeichnet, dass Hal Brom ist

4. Farbstoffmischungen gemäss einem der Ansprüche 1 bis 3, dadurch gekennzeichnet, dass U-Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist.

5. Farbstoffmischungen gemäss einem der Ansprüche 1 bis 4, dadurch gekennzeichnet, dass U -Cl oder -OSO₃H, insbesondere -OSO₃H, ist.

6. Farbstoffmischungen gemäss einem der Ansprüche 1 bis 5, dadurch gekennzeichnet, dass X₁ und X₂ unabhängig voneinander jeweils ein Rest der Formel (3a) oder (3c) sind.

7. Farbstoffmischungen gemäss einem der Ansprüche 1 bis 6, dadurch gekennzeichnet, dass X₃ und X₄ unabhängig voneinander jeweils ein Rest der Formel (3a) oder (3c) sind.

8. Farbstoffmischungen gemäss einem der Ansprüche 1 bis 7, dadurch gekennzeichnet, dass X₁, X₂, X₃ und X₄ ein Rest der Formel (3a) oder (3c) sind und U der Rest -OSO₃H ist, und die Summe von m und n die Zahl 0 oder 1 ist.

9. Farbstoffmischungen gemäss Anspruch 1, dadurch gekennzeichnet, dass
sie mindestens einen Reaktivfarbstoff aus der Gruppe der Formeln (5), (6) und (7) 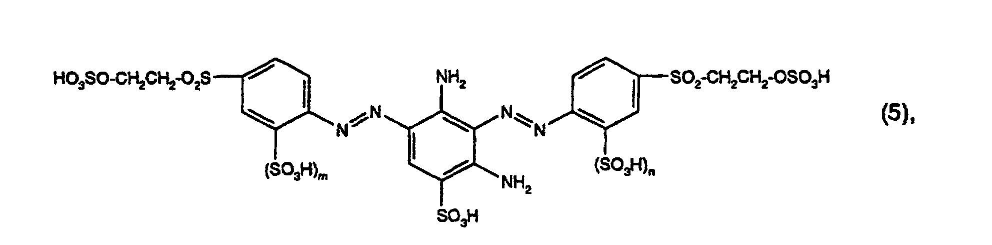 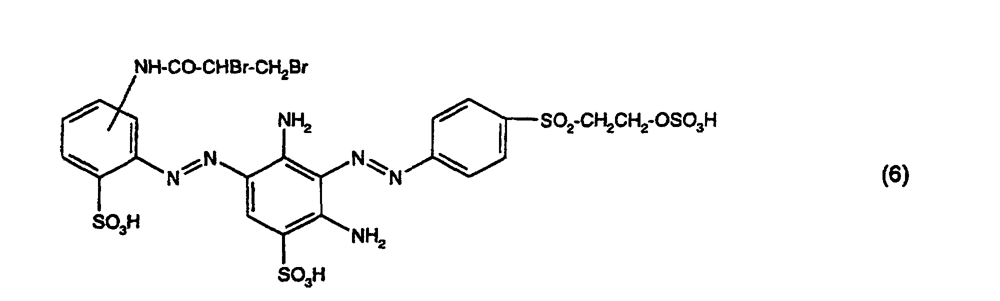 und 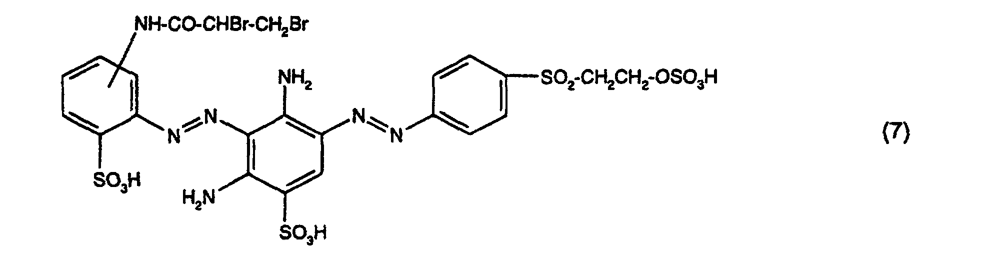 zusammen mit mindestens einem Reaktivfarbstoff aus der Gruppe der Formeln (8) und (9) 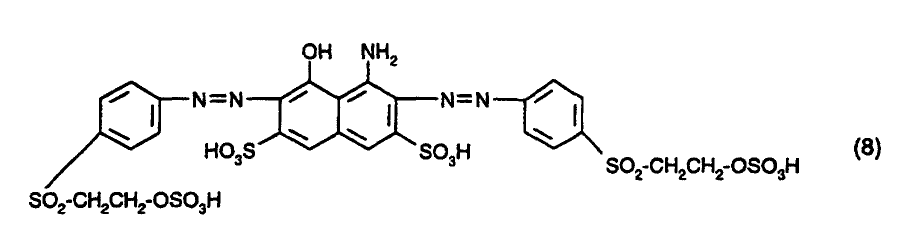 und 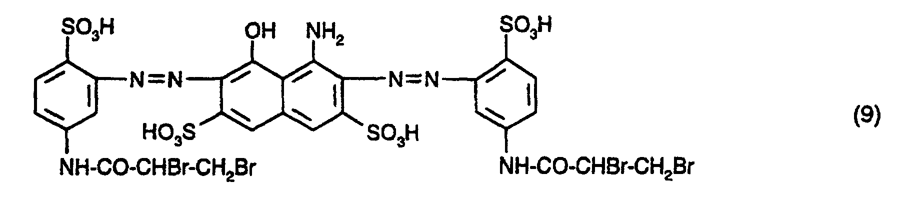 enthalten, wobei die Summe von m und n die Zahl 0 oder 1 ist.

10. Farbstoffmischungen gemäss Anspruch 9, dadurch gekennzeichnet, dass sie einen Reaktivfarbstoff der Formel (5) zusammen mit einem Reaktivfarbstoff der Formel (8) enthalten.

11. Farbstoffmischungen gemäss Anspruch 1, dadurch gekennzeichnet, dass, falls die Farbstoffmischungen einen Farbstoff der Formel (4a) enthalten, das Gewichtsverhältnis des Farbstoffs der Formel (1) zu dem Farbstoff der Formel (4a) grösser als 4:1 ist.

12. Verfahren zum Färben oder Bedrucken von natürlichen oder synthetischen Polyamidfasermaterialen, dadurch gekennzeichnet, dass man eine Farbstoffmischung verwendet, welche mindestens einen Reaktivfarbstoff der Formel 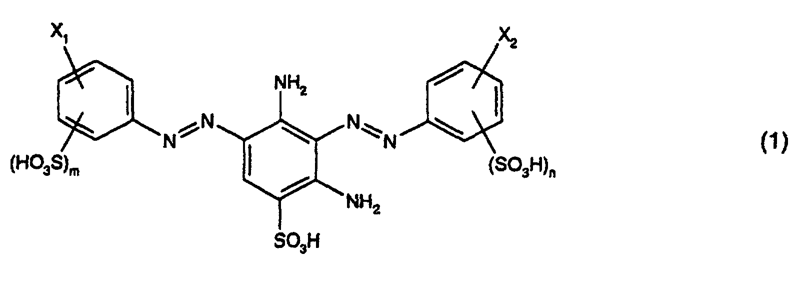 zusammen mit mindestens einem Reaktivfarbstoff der Formel 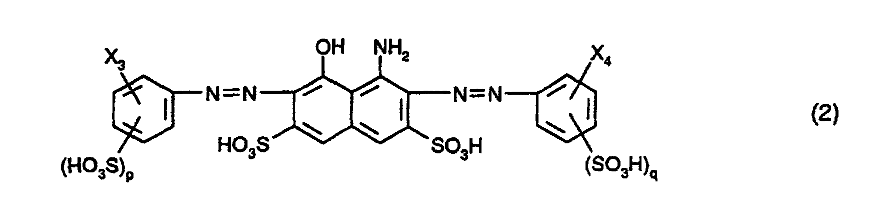 enthält, worin
m und n unabhängig voneinander jeweils die Zahl 0, 1 oder 2,
p und q unabhängig voneinander jeweils die Zahl 0 oder 1 sind und
X₁, X₂, X₃ und X₄ unabhängig voneinander jeweils einen Rest der Formel
-SO₂-CH₂-CH₂-U (3a),
-SO₂-CH=CH₂ (3b),
-NH-CO-CH(Hal)-CH₂-Hal (3c)
oder
-NH-CO-C(Hal)=CH₂ (3d)
bedeuten und U eine Abgangsgruppe und Hal Halogen ist.

13. Verwendung der Farbstoffmischungen gemäss einem der Ansprüche 1 bis 11 zum Färben oder Bedrucken von hydroxylgruppenhaltigem oder stickstoffhaltigem Fasermaterial.

14. Verwendung gemäss Anspruch 13 zum Färben oder Bedrucken von cellulosischem Fasermaterial.

15. Reaktivfarbstoffe der Formel 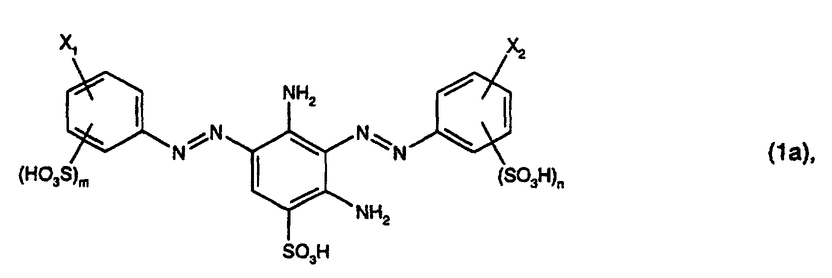 worin
m und n unabhängig voneinander jeweils die Zahl 0, 1 oder 2 bedeuten,
einer der Reste X₁ und X₂ einen Rest der Formel
-SO₂-CH₂-CH₂-U (3a),
-SO₂-CH=CH₂ (3b),
-NH-CO-CH(Hal)-CH₂-Hal (3c)
oder
-NH-CO-C(Hal)=CH₂ (3d)
und der andere der Reste X₁ und X₂ einen Rest der Formel (3c) oder (3d) bedeutet, und U eine Abgangsgruppe und Hal Halogen ist.

16. Verfahren zur Herstellung von Reaktivfarbstoffen der Formel (1a), dadurch gekennzeichnet, dass man Verbindungen der Formeln 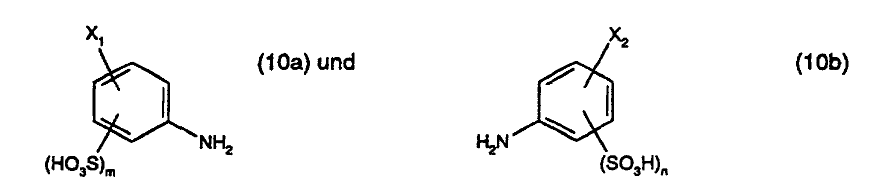 diazotiert und in beliebiger Reihenfolge auf eine Kupplungskomponente der Formel 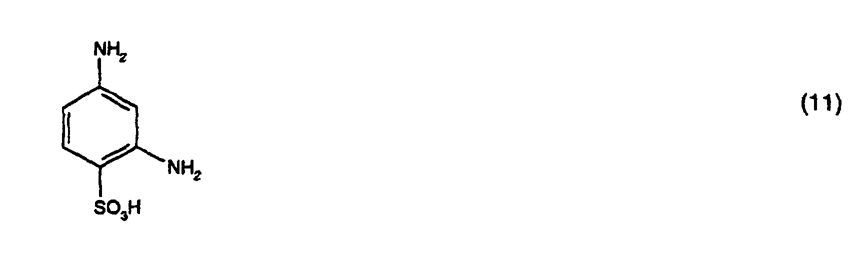 kuppelt, wobei für X₁, X₂, m und n die in Anspruch 15 angegebenen Bedeutungen gelten.

## Claims

1. A dye mixture which comprises at least one reactive dye of formula 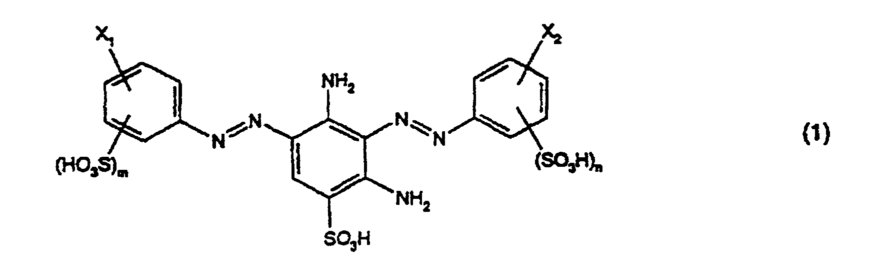 together with at least one reactive dye formula 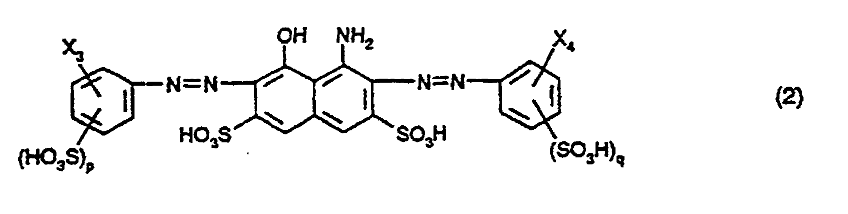 in which
m and n are each independently of the other the number 0, 1 or 2,
p and q are each independently of the other the number 0 or 1, and
X₁, X₂, X₃, and X₄ are each independently of one another a radical of formula
-SO₂-CH₂-CH₂-U (3a),
-SO₂-CH=CH₂ (3b),
-NH-CO-CH(Hal)-CH₂Hal (3c)
or
-NH-CO-C(Hal)=CH₂ (3d),
U is a leaving group, and Hal is halogen,
with the proviso that the dye mixture does not contain any substantial amount of a reactive dye of formula 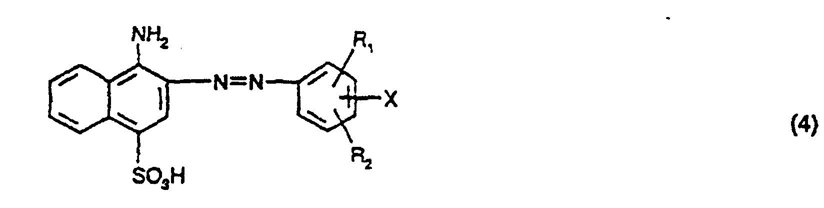 in which R₁ and R₂ are hydrogen, methyl or methoxy and X is a radical of the above formula (3a) or (3b),
or, if the dye mixture contains a reactive dye of formula 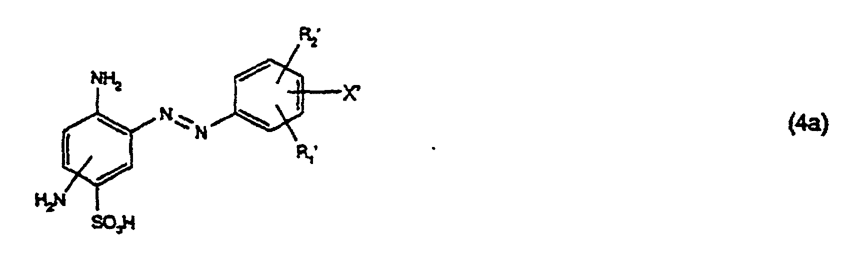 in which R₁' and R₂' are hydrogen, methyl or methoxy and X' is a radical of the above formula (3a) or (3b), the weight ratio of the dye of formula (1) to the dye of formula (4a) is greater than 2:1.

2. A dye mixture according to claim 1, wherein Hal is chloro or bromo.

3. A dye mixture according to either claim 1 or claim 2, wherein Hal is bromo.

4. A dye mixture according to any one of claims 1 to 3, wherein U is -Cl, -Br, -F, -OSO₃H, -SSO₃H, -OCO-CH₃, OPO₃H₂, -OCO-C₆H₅, -OSO₂-C₁-C₄alkyl or -OSO₂N(C₁-C₄alkyl)₂.

5. A dye mixture according to any one of claims 1 to 4, wherein U is -Cl or -OSO₃H, especially -OSO₃H.

6. A dye mixture according to any one of claims 1 to 5, wherein X₁ and X₂ are each independently of the other a radical of formula (3a) or (3c).

7. A dye mixture according to any one of claims 1 to 6, wherein X₃ and X₄ are each independently of the other a radical of formula (3a) or (3c).

8. A dye mixture according to any one of claims 1 to 7, wherein X₁, X₂, X₃ and X₄ are a radical of formula (3a) or (3c), U is the radical -OSO₃H, and the sum of m and n is the number 0 or 1.

9. A dye mixture according to claim 1 which comprises at least one reactive dye from the group of formulae (5), (6) and (7) 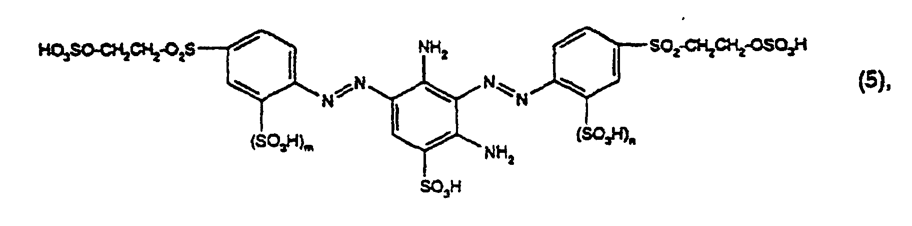 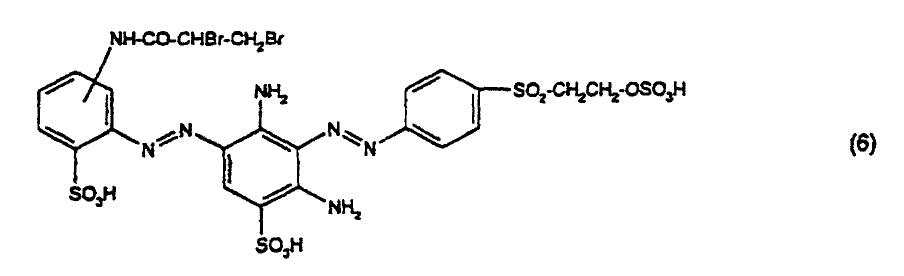 and 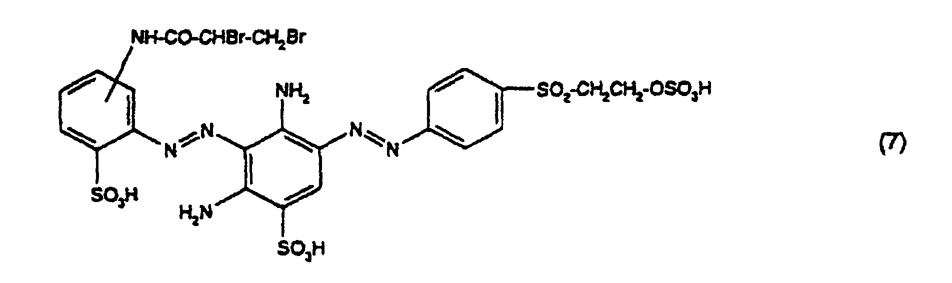 together with at least one reactive dye from the group of formulae (8) and (9) 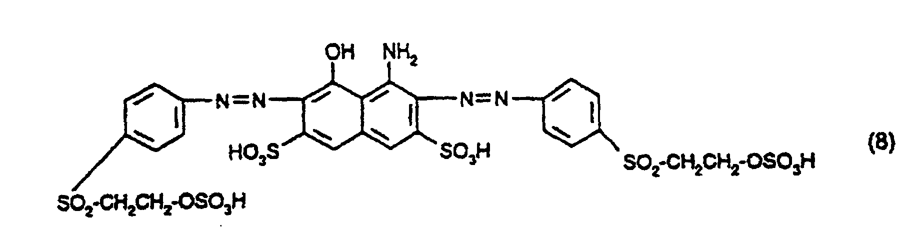 and 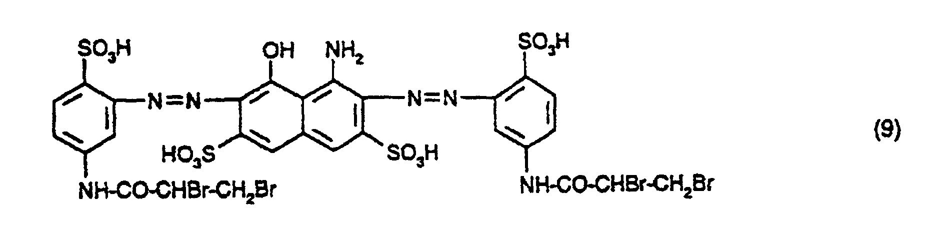 the sum of m and n being the number 0 or 1.

10. A dye mixture according to claim 9, which comprises a reactive dye of formula (5) together with a reactive dye of formula (8).

11. A dye mixture according to claim 1, wherein, if the dye mixture contains a dye of formula (4a), the weight ratio of the dye of formula (1) to the dye of formula (4a) is greater than 4:1.

12. A process for dyeing or printing natural or synthetic polyamide fibre materials, which comprises using a dye mixture comprising at least one reactive dye of formula 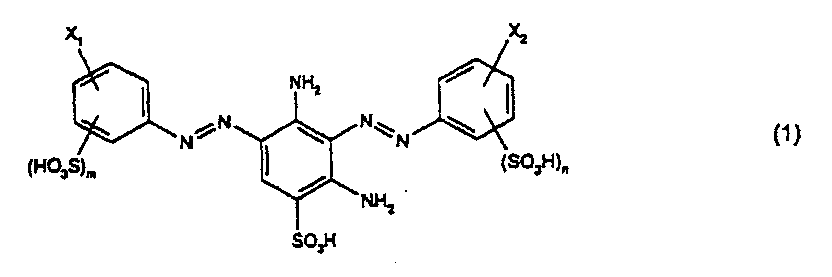 together with at least one reactive dye of formula 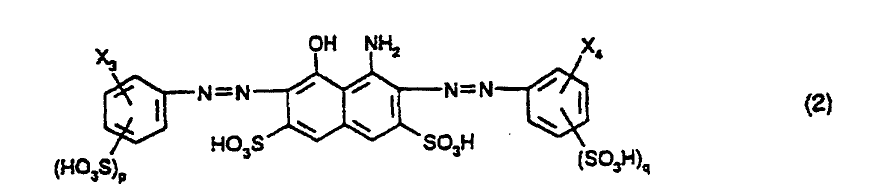 in which
m and n are each independently of the other the number 0, 1 or 2,
p and q are each independently of the other the number 0 or 1, and
X₁, X₂, X₃ and X₄ are each independently of one another a radical of formula
-SO₂-CH₂-CH₂-U (3a),
-SO₂-CH=CH₂ (3b),
-NH-CO-CH(Hal)-CH₂Hal (3c)
or
-NH-CO-C(Hal)-CH₂ (3d),
U is a leaving group, and Hal is halogen.

13. Use of the dye mixture according to any one of claims 1 to 11 for dyeing or printing hydroxyl-containing or nitrogen-containing fibre material.

14. Use according to claim 13 for dyeing or printing cellulosic fibre material.

15. A reactive dye of formula 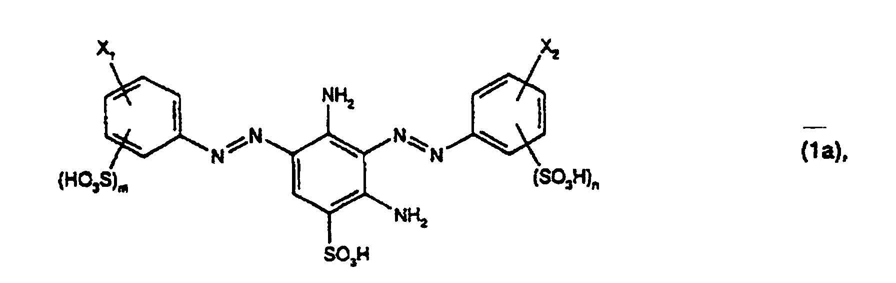 in which
m and n are each independently of the other the number 0, 1 or 2,
one of the radicals X₁ and X₂ is a radical of formula
-SO₂-CH₂-CH₂-U (3a),
-SO₂-CH=CH₂ (3b),
-NH-CO-CH(Hal)-CH₂Hal (3c)
or
-NH-CO-C(Hal)=CH₂ (3d)
and the other one of the radicals X₁ and X₂ is a radical of formula (3c) or (3d), U is a leaving group, and Hal is halogen.

16. A process for preparing a reactive dye of formula (1a), which comprises diazotising compounds of formulae 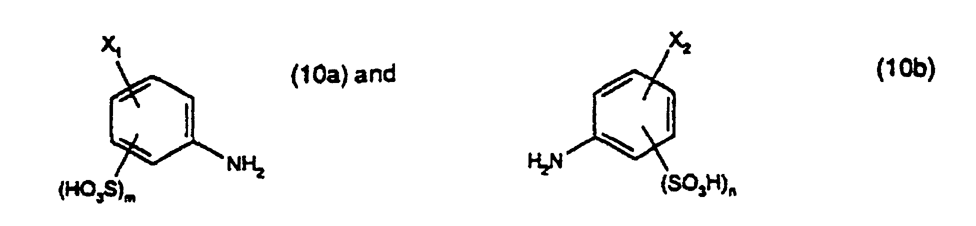 and coupling the products in any desired order onto a coupling component of formula 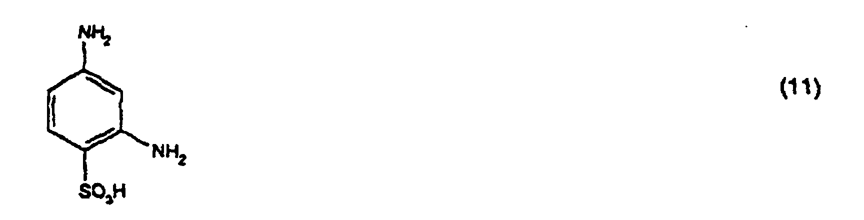 where X₁, X₂ m and n are as defined in claim 15.

## Revendications

1. Mélanges de colorants caractérisés en ce qu'ils contiennent au moins un colorant réactif de formule 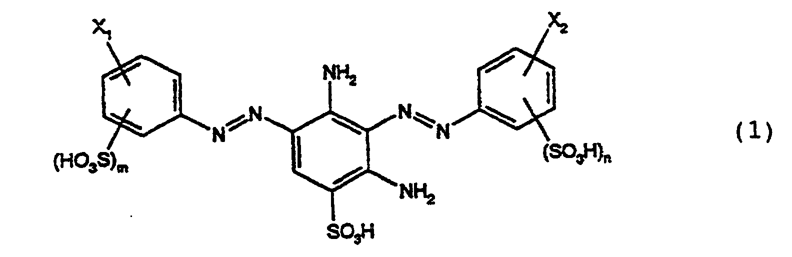 conjointement avec au moins un colorant réactif de formule 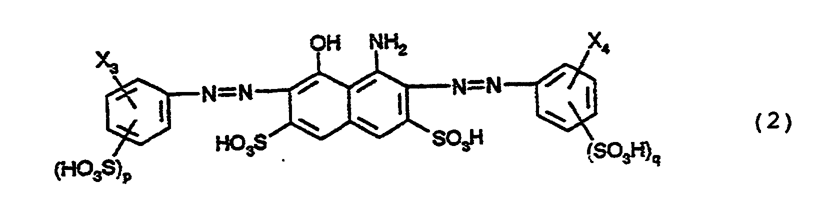 où
m et n valent chacun, indépendamment l'un de l'autre, 0, 1 ou 2,
p et q valent chacun, indépendamment l'un de l'autre, 0 ou 1, et
X₁, X₂, X₃ et X₄ représentent chacun, indépendamment l'un de l'autre, un reste de formule
-SO₂-CH₂-CH₂-U -3a)
-SO₂-CH=CH₂ (3b)
-NH-CO-CH(hal)-CH₂-hal (3c)
ou
-NH-CO-C(hal)=CH₂ (3d)
et U représente un groupe partant et hal un atome d'halogène,
à condition que les mélanges de colorants ne contiennent pas de quantités essentielles d'un colorant réactif de formule 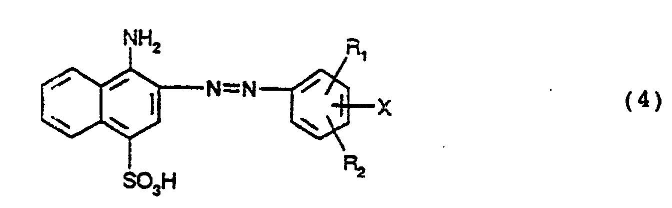 où
R₁ et R₂ représentent un atome d'hydrogène, un groupe méthyle ou méthoxy et
X représente un reste de formule (3a) ou (3b) ci-dessus,
ou, dans le cas où les mélanges de colorants contiennent un colorant de formule 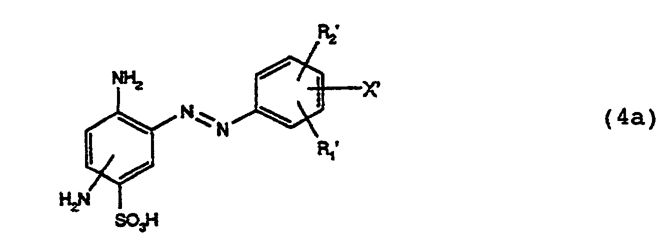 où
R₁' et R₂' représentent un atome d'hydrogène, un groupe méthyle ou méthoxy et
X' représente un reste de formules (3a) ou (3b) précitées,
le rapport pondéral du colorant de formule (1) au colorant de formule (4a) étant supérieur à 2:1.

2. Mélanges de colorants selon la revendication 1, caractérisés en ce que hal représente un atome de chlore ou de brome.

3. Mélanges de colorants selon l'une des revendications 1 et 2, caractérisés en ce que hal représente un atome de brome.

4. Mélanges de colorants selon l'une des revendications 1 à 3, caractérisés en ce que U représente des groupes -Cl, -Br, -F, -OSO₃H, -SSO₃H, -OCO-CH₃, -OPO₃H₂, -OCO-C₆H₅, -OSO₂-alkyle en C₁-C₄ ou -OSO₂-N-(alkyle en C₁-C₄)₂.

5. Mélanges de colorants selon l'une des revendications 1 à 4, caractérisés en ce que U représente des groupes -C1 ou -OSO₃H, notamment -OSO₃H.

6. Mélanges de colorants selon l'une des revendications 1 à 5, caractérisés en ce que X₁ et X₂ représentent chacun, indépendamment l'un de l'autre, un reste de formule (3a) ou (3c).

7. Mélanges de colorants selon l'une des revendications 1 à 6, caractérisés en ce que X₃ et X₄ représentent chacun, indépendamment l'un de l'autre, un reste de formule (3a) ou (3c).

8. Mélanges de colorants selon l'une des revendications 1 à 7, caractérisés en ce que X₁, X₂, X₃ et X₄ représentent un reste de formule (3a) ou (3c) et U représente le reste -OSO₃H, et la somme de m et n est égale à 0 ou 1.

9. Mélanges de colorants selon la revendication 1, caractérisés en ce qu'ils contiennent au moins un colorant réactif pris dans le groupes des formules (5), (6) et (7) 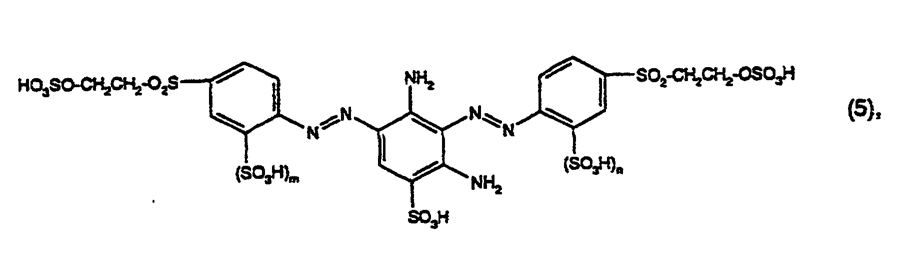 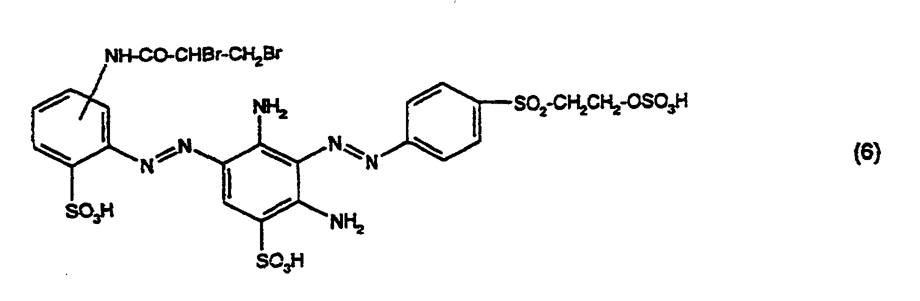 et 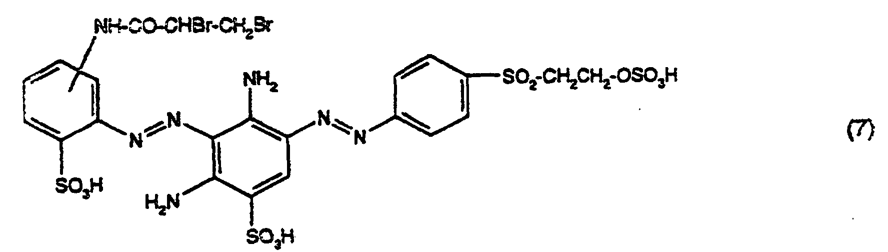 conjointement avec au moins un colorant réactif pris dans le groupe des formules (8) et (9) 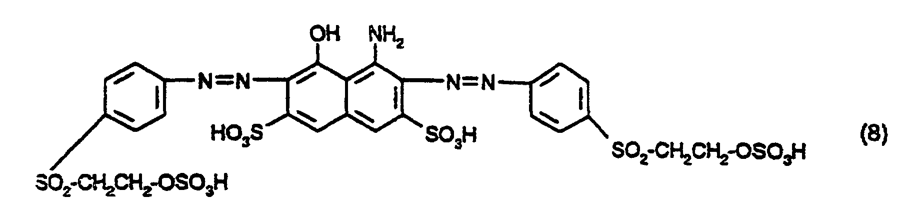 et 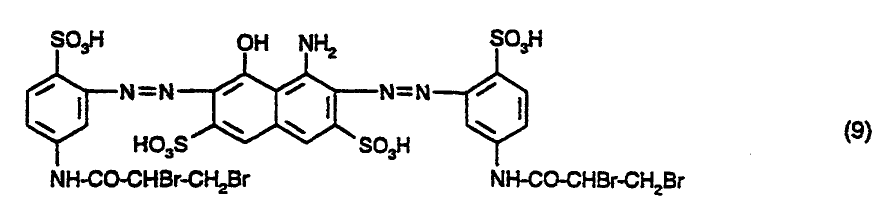 la somme de m et de n est égale à 0 ou 1.

10. Mélanges de colorants selon la revendication 9, caractérisés en ce qu'ils contiennent un colorant réactif de formule (5) conjointement avec un colorant réactif de formule (8).

11. Mélanges de colorants selon la revendication 1, caractérisés en ce que, dans le cas où les mélanges de colorants contiennent un colorant de formule (4a), le rapport pondéral du colorant de formule (1) au colorant de formule (4a) est supérieur à 4:1.

12. Procédé pour la teinture ou l'impression de matières fibreuses polyamide naturelles ou synthétiques, caractérisé en ce qu'on utilise un mélange de colorants qui contient au moins un colorant réactif de formule 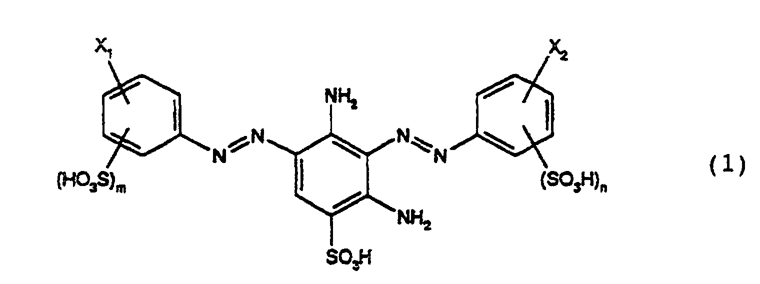 conjointement avec au moins un colorant réactif de formule 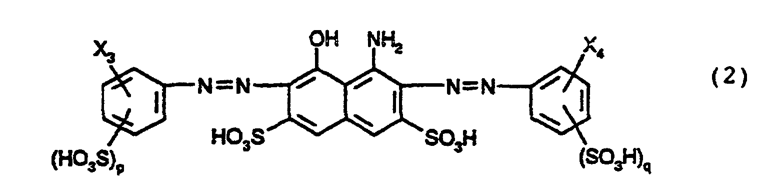 où
m et n valent chacun, indépendamment l'un de l'autre, 0, 1 ou 2,
p et q valent chacun, indépendamment l'un de l'autre, 0 ou 1, et
X₁, X₂, X₃ et X₄ représentent chacun, indépendamment l'un de l'autre, un reste de formule
-SO₂-CH₂-CH₂-U (3a)
-SO₂-CH=CH₂ (3b)
-NH-CO-CH(hal)-CH₂-hal (3c)
ou
-NH-CO-C(hal)=CH₂ (3d)
et U représente un groupe partant et hal un atome d'halogène.

13. Utilisation du mélange de colorants selon l'une des revendications 1 à 11 pour la teinture ou l'impression de matière fibreuse azotée ou contenant des groupes hydroxyle.

14. Utilisation selon la revendication 13 pour la teinture ou l'impression de matière fibreuse cellulosique.

15. Colorants réactifs de formule 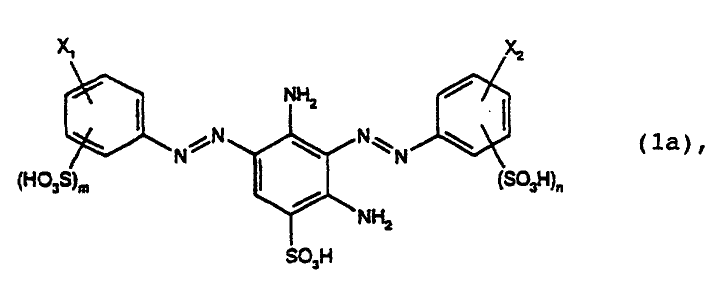 où
m et n valent chacun, indépendamment l'un de l'autre, 0, 1 ou 2,
un des restes X₁ et X₂ représente un reste de formule
-SO₂-CH₂-CH₂-U (3a)
-SO₂-CH=CH₂ (3b)
-NH-CO-CH(hal)-CH₂-hal (3c)
ou
-NH-CO-C(hal)=CH₂ (3d)
et l'autre des restes X₁ et X₂ représente un reste de formule (3c) ou (3d), et U représente un groupe partant et hal un atome d'halogène.

16. Procédé pour la préparation de colorants réactifs de formule (1a), caractérisé en ce qu'on diazote des composés de formules 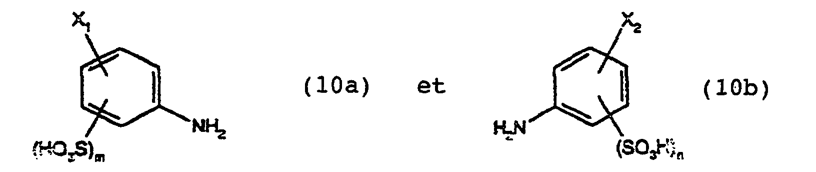 et on copule dans une succession arbitraire sur un composant de copulation de formule 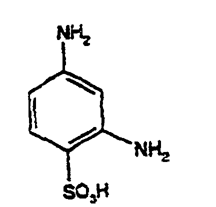 où les significations données à la revendication 15 s'appliquent à X₁, X₂, m et n.
